# EUROPEAN PATENT APPLICATION

(11) **EP 4 083 879 A1**
(43) Date of publication of application: **02.11.2022**
(21) Application number: 20905153.1
(22) Date of filing: 29.09.2020
(51) Int. Cl.: G06Q 10/06, G06Q 50/06

(54) **EVALUATION DEVICE, EVALUATION METHOD, AND EVALUATION PROGRAM**

(30) Priority: 24.12.2019 JP 2019233033
(71) Applicant: Hitachi, Ltd., Tokyo 100-8280 (JP)
(72) Inventor: MATSUI, Eri, Tokyo 100-8280 (JP)
(74) Representative: MERH-IP Matias Erny Reichl Hoffmann Patentanwälte PartG mbB
(86) International application number: PCT/JP2020/036977
(87) International publication number: WO 2021/131206

(57) **Abstract**

Provided is an evaluation apparatus configured to: access a DB; acquire an evaluation perspective of the business entity; identify same-category business entities classified into the same scale category as that of a specified business entity based on the value of the task index item relating to the population; extract the values of the plurality of task index items from the DB for each of the identified specified business entity and same-category business entities based on the acquired evaluation perspective; calculate values of a plurality of task indices through use of the extracted values of the plurality of task index items; select a combination of the calculated values of each of the same task indices of the specified business entity and the same-category business entities as one of an output subject or a non-output subject based on a predetermined evaluation criterion; and output the combination of the values.

## Description

### CLAIM OF PRIORITY

The present application claims priority from Japanese patent application JP 2019-233033 filed on December 24, 2019, the content of which is hereby incorporated by reference into this application.

### BACKGROUND

This invention relates to an evaluation apparatus, method, and program for evaluating data.

The current water business has various problems, such as a pressure on financial affairs caused by renewal of old facilities, deficiency of human resources due to retirement of skilled staff members, and a decrease in income due to decrease in demanded water amount. It is required for sustainable operation to reconsider contents of the business, methods of the business, and an operation system while addressing those problems. However, there are a great number of indices to be examined in order to appropriately reconsider the contents and the methods of the business and the operation system. Moreover, task data required to streamline the business tends to be used through a system held by each of sections pertaining the task, and used by each of those sections. Accordingly, sharing information, decision making based on the shared information, and improvement of efficiency of the task are not necessarily executed appropriately.

Meanwhile, in WO 2016/157467 A1, there is disclosed data analysis for evaluating a plurality of pieces of subject data. In this data analysis, the evaluation corresponds to relevance between each piece of subject data and a predetermined case. An index enabling ranking of the plurality of pieces of subject data is generated through the evaluation, and the index changes based on input provided by a user. The ranking of the plurality of pieces of subject data changes in accordance with the index which changes based on the input. The input is executed to classify reference data different from the plurality of pieces of subject data based on relevance between the reference data and the predetermined case. In the classification, the reference data is classified into a plurality of pieces of classification information based on contents of the reference data. At least one of the plurality of pieces of classification information is assigned to the reference data through the input. In WO 2016/157467 A1, a pattern by which the reference data is characterized in accordance with the classification information assigned through the input is extracted from the reference data. In WO 2016/157467 A1, relevance between the subject data and the predetermined case is evaluated based on the extracted pattern, to thereby determine the index. The determined index is set to the subject data. The plurality of pieces of subject data are ranked in accordance with the index. The ranked plurality of pieces of subject data are presented to a user.

However, which task index is appropriate for which input condition and which evaluation condition is not known before the calculation of the task index. In this case, as the number of calculation results of the task indices increases, it becomes more difficult to present the calculation results to the user. Moreover, as the number of the calculation results of the task indices increases, it becomes more difficult to grasp effective task indices.

### SUMMARY

This invention has an object to efficiently narrow down effective task indices,

An aspect of the disclosure in the present application is an evaluation apparatus, comprising: a processor configured to execute a program; and a storage device configured to store the program, the evaluation apparatus being configured to access a database configured to store, for each business entity, values of a plurality of task index items including a task index item relating to a population, the processor being configured to execute: acquisition processing of acquiring an evaluation perspective of the business entity; identification processing of identifying same-category business entities classified into the same scale category as the scale category of a specified business entity based on the value of the task index item relating to the population; extraction processing of extracting the values of the plurality of task index items from the database for each of the specified business entity and the same-category business entities identified by the identification processing based on the evaluation perspective acquired by the acquisition processing; calculation processing of calculating values of a plurality of task indices through use of the values of the plurality of task index items extracted by the extraction processing; selection processing of selecting a combination of the values of the same task indices of each of the specified business entity and the same-category business entities calculated by the calculation processing as one of an output subject or a non-output subject based on a predetermined evaluation criterion; and output processing of outputting the combination of the values selected as the output subject by the selection processing.

Another aspect of the disclosure in the present application is an evaluation apparatus, comprising: a processor configured to execute a program; and a storage device configured to store the program, the evaluation apparatus being configured to access a database configured to store values of a plurality of task index items for each business entity, the processor being configured to execute: identification processing of identifying specified-category business entities each having a category specified based on an evaluation perspective which is based on a business scale of each of the business entities; selection processing of receiving a selection of a first task index and a second task index; extraction processing of extracting, from the database, values of the plurality of task index items required for calculating a value of each of the first task index and the second task index selected by the selection processing for each of the specified-category business entities identified by the identification processing; calculation processing of calculating the value of the first task index and the value of the second task index for each of the specified-category business entities through use of the values of the plurality of task index items extracted by the extraction processing; and output processing of outputting calculation results obtained by the calculation processing.

According to the at least one representative embodiment of this invention, it is possible to efficiently narrow down the effective task indices. Other objects, configurations, and effects than those described above are clarified by the following description of an embodiment.

### BRIEF DESCRIPTION OF THE DRAWINGS

FIG. 1 is a block diagram for illustrating a hardware configuration example of each of an evaluation apparatus.
FIG. 2 is an explanatory diagram for illustrating an example of the water quality operation management DB.
FIG. 3 is an explanatory diagram for illustrating an example of the water quality facility maintenance DB.
FIG. 4 is an explanatory diagram for illustrating an example of the water supply operation management DB.
FIG. 5 is an explanatory diagram for illustrating an example of the water supply operation management DB.
FIGs. 6A and 6B are explanatory diagrams for illustrating an example of the water supply facility maintenance DB.
FIG. 7 is an explanatory diagram for illustrating an example of the finance DB.
FIG. 8 is an explanatory diagram for illustrating an example of the organization/human resource DB.
FIG. 9 is an explanatory diagram for illustrating an example of the communication DB.
FIG. 10 is an explanatory diagram for illustrating an example of the profile DB.
FIG. 11 is an explanatory diagram for illustrating an example of the related information DB.
FIGs. 12A and 12B are tables 1 which summarize the calculation contents of the task index values.
FIGs. 13A and 13B are tables 2 which summarize the calculation contents of the task index values.
FIGs. 14A and 14B are tables 3 which summarize the calculation contents of the task index values.
FIG. 15 is a table 4 which summarizes the calculation contents of the task index values.
FIGs. 16A and 16B are tables 5 which summarize the calculation contents of the task index values.
FIGs. 17A and 17B are tables 6 which summarize the calculation contents of the task index values.
FIG. 18 is a table 7 which summarizes the calculation contents of the task index values.
FIG. 19 is a table 8 which summarizes the calculation contents of the task index values.
FIGs. 20A and 20B are tables 9 which summarize the calculation contents of the task index values.
FIG. 21 is an explanatory diagram for illustrating an example of the input screen.
FIG. 22 is an explanatory diagram for illustrating an output screen example 1 of the secular changes.
FIG. 23 is an explanatory diagram for illustrating an output screen example 2 of the secular changes.
FIG. 24 is an explanatory diagram for illustrating an output screen example 3 of the secular changes.
FIG. 25 is an explanatory diagram for illustrating an output screen example 4 of the secular changes.
FIG. 26 is an explanatory diagram for illustrating an output screen example 5 of the secular changes.
FIG. 27 is an explanatory diagram for illustrating an output screen example 1 for a single business entity.
FIG. 28 is an explanatory diagram for illustrating an output screen example 2 for a single business entity.
FIG. 29 is an explanatory diagram for illustrating an output screen example 3 for a single business entity.
FIG. 30 is an explanatory diagram for illustrating an output screen example 4 for a single business entity.
FIG. 31 is an explanatory diagram for illustrating an output screen example 5 for a single business entity.
FIG. 32 is an explanatory diagram for illustrating an output screen example 6 for a single business entity.
FIG. 33 is an explanatory diagram for illustrating an example of an output screen for the category.
FIG. 34 is a flowchart 1 for illustrating the example of the evaluation processing procedure executed by the evaluation apparatus.
FIG. 35 is a flowchart 2 for illustrating the example of the evaluation processing procedure executed by the evaluation apparatus.
FIG. 36 is a flowchart 3 for illustrating the example of the evaluation processing procedure executed by the evaluation apparatus.
FIG. 37 is a flowchart 4 for illustrating the example of the evaluation processing procedure executed by the evaluation apparatus.

### DETAILED DESCRIPTION OF THE EMBODIMENTS

In at least one embodiment of this invention, description is given of an evaluation apparatus for executing utilization of pieces of task-related data which have been accumulated, quick calculation of task indices through utilization of the task-related data, and evaluation of the task indices, more specifically, comprehensive evaluation such as whether or not an index which requires countermeasures is overlooked.

This evaluation apparatus automatically analyzes attributes of a business entity to be evaluated, and calculates task indices for comprehensive analysis, comparison, and evaluation. Moreover, in addition to comparison with an average of nationwide business entities for the task indices, the evaluation apparatus automatically analyzes secular changes in the task indices of the business entity and the attributes of the business entity to be evaluated, and executes analysis, comparison, and evaluation together with the task indices of business entities having equivalent attributes.

As a result, in addition to the comparison with the average of the nationwide business entities, the analysis, the comparison, and the evaluation of the indices including the indices having large secular changes and the indices of the business entities having the same attributes can be executed. Thus, in addition to the comparison for only specified indices, it is possible to comprehensively suppress overlooking of information. With reference to the accompanying drawings, the evaluation apparatus according to the at least one embodiment is now described. It should be noted that, in the at least one embodiment, description is given while using data on a business relating to water, but the target business is not limited to the water, and may be a business relating to other resources. Moreover, the business entity is an entity which conducts the business, and includes local governments, such as prefectures and municipalities, and a corporate group which undertakes outsourced business of a plurality of local governments.

### <Hardware Configuration Example of Evaluation Apparatus>

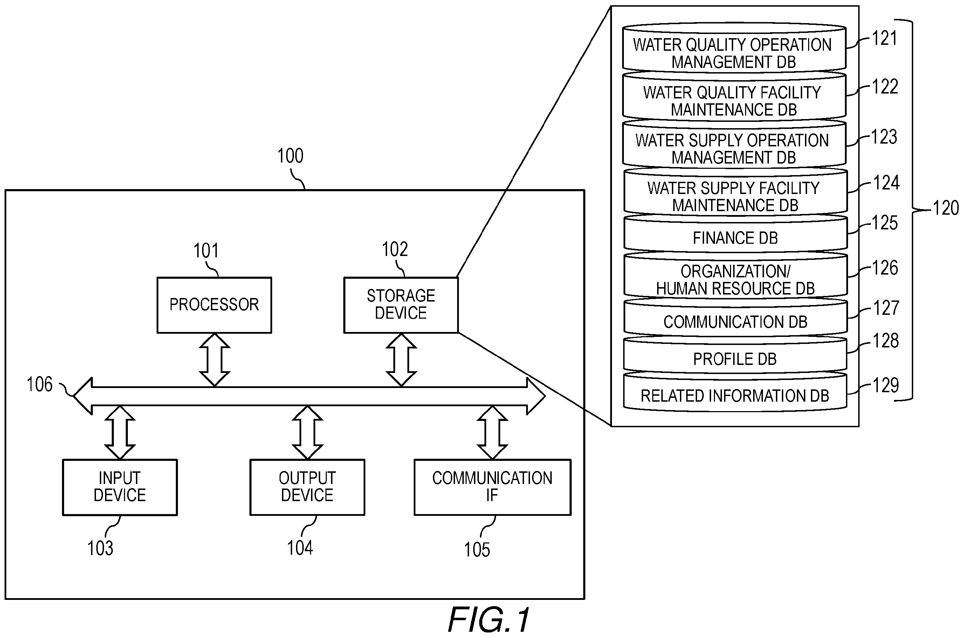

FIG. 1 is a block diagram for illustrating a hardware configuration example of each of an evaluation apparatus. An evaluation apparatus 100 includes a processor 101, a storage device 102, an input device 103, an output device 104, and a communication interface (communication IF) 105. The processor 101, the storage device 102, the input device 103, the output device 104, and the communication IF 105 are coupled to one another through a bus 106. The processor 101 is configured to control the evaluation apparatus 100.
The storage device 102 serves as a work area for the processor 101. The storage device 102 is also a non-transitory or transitory recording medium configured to store various programs and various kinds of data. Examples of the storage device 102 include a read only memory (ROM), a random access memory (RAM), a hard disk drive (HDD), and a flash memory. The input device 103 is configured to input data. Examples of the input device 103 include a keyboard, a mouse, a touch panel, a numeric keypad, a scanner and a sensor. The output device 104 is configured to output data. Examples of the output device 104 include a display, a printer, and a speaker. The communication IF 105 is coupled to the network, and is configured to transmit and receive data.

Moreover, the storage device 102 stores, for example, a water quality operation management DB 121, a water quality facility maintenance DB 122, a water supply operation management DB 123, a water supply facility maintenance DB 124, a finance DB 125, an organization/human resource DB 126, a communication DB 127, a profile DB 128, and a related information DB 129. At least one of those databases of the DB group 120 may be stored in the storage device 102 of another computer that can be accessed by the evaluation apparatus 100 through the communication IF 105.

### <DB Group 120>

The above-mentioned DB group 120 is now described. Each of the remaining DBs of the DB group 120 other than the related information DB 129 includes subclasses 201 and task index items 202. The task index items 202 are parameters to be used to calculate a task index value in a corresponding subclass 201, For a DB having only one subclass 201, the subclass 201 is omitted. Each of those remaining DBs stores a value in each fiscal year of the task index item 202 for each local government.

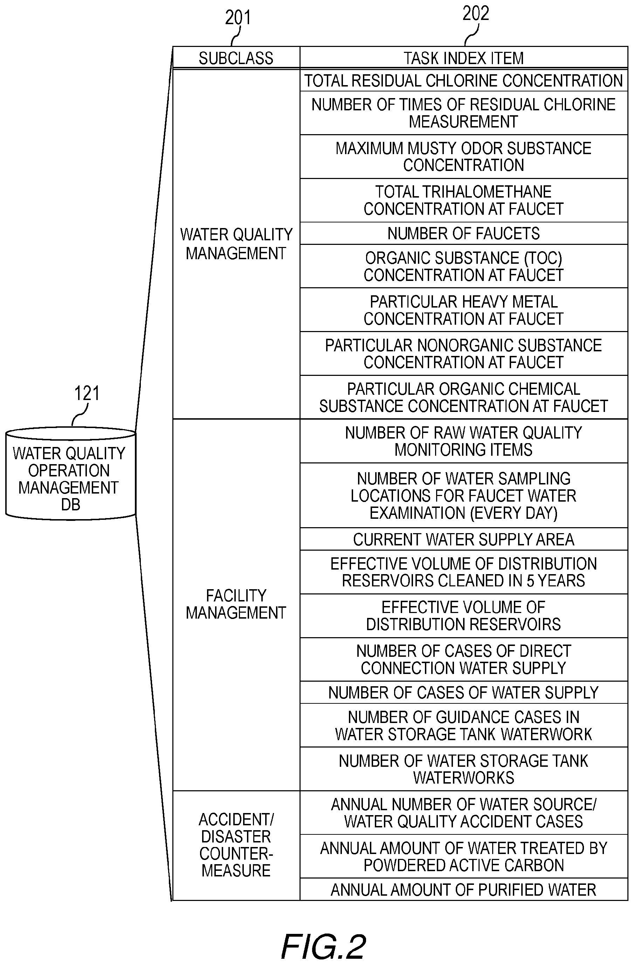

FIG. 2 is an explanatory diagram for illustrating an example of the water quality operation management DB 121. The water quality operation management DB 121 is a database for managing an operation of water quality. In the water quality operation management DB 121, the water quality operation management is divided into subclasses 201 of water quality management, facility management, and accident/disaster countermeasure. In the case of the task index item 202 of the water quality operation management DB 121, for example, a total residual chlorine concentration and a number of times of residual chlorine measurement are used to calculate a task index value of an average residual chlorine concentration.

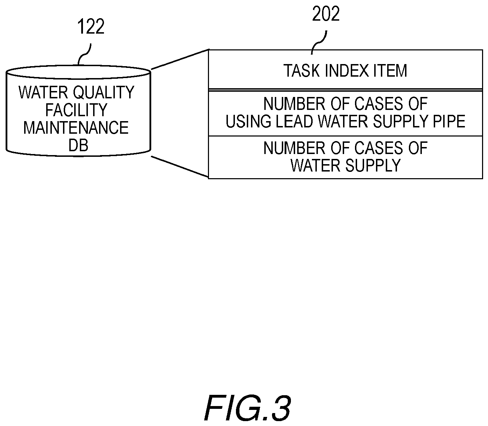

FIG. 3 is an explanatory diagram for illustrating an example of the water quality facility maintenance DB 122. The water quality facility maintenance DB 122 is, for example, a database for managing maintenance of facilities for the water quality such as a water supply authority. In the case of the task index items 202 of the water quality facility maintenance DB 122, for example, a number of cases of using lead water supply pipe and a number of cases of water supply are used to calculate a task index value of a lead water supply pipe ratio.

The water supply operation management DB 123 is now described. The water supply operation management DB 123 is a database for managing an operation of the supply of the water. The water supply operation management DB 123 has a large number of task index items 202, and is thus divided into water supply operation management DBs 123A and 123B for the convenience of description.

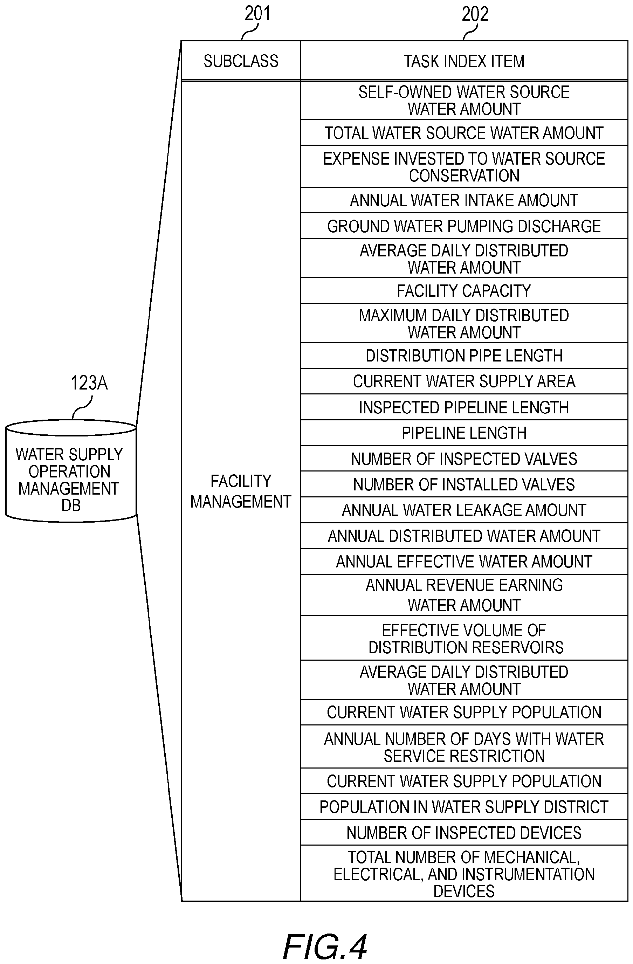

FIG. 4 is an explanatory diagram for illustrating an example of the water supply operation management DB 123A. In the case of the task index items 202 of water supply operation management DB 123A, for example, a self-owned water source water amount and a total water source water amount are used to calculate a task index value of a self-owned water source ratio.

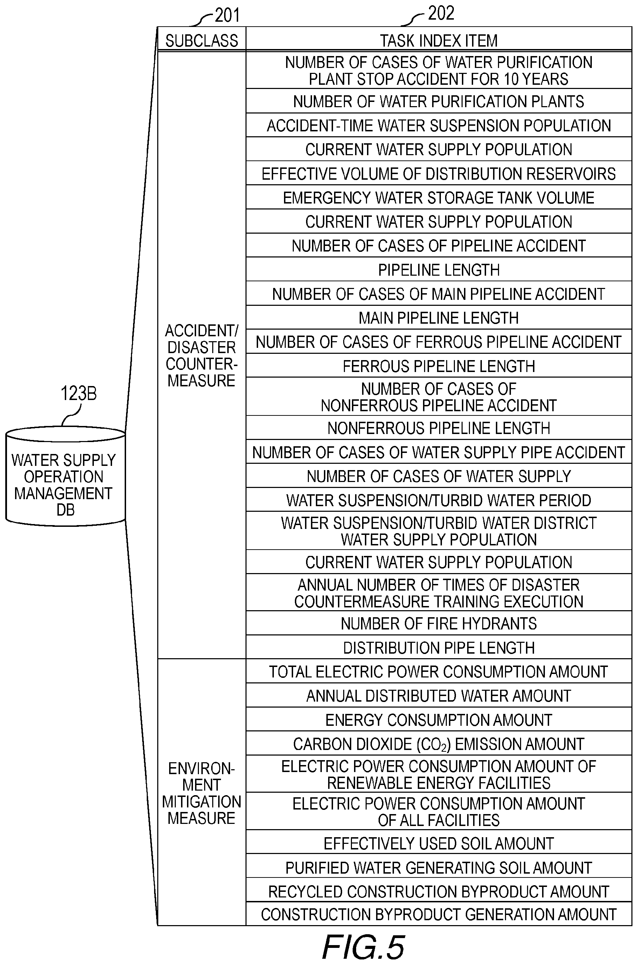

FIG. 5 is an explanatory diagram for illustrating an example of the water supply operation management DB 123B. In the case of the task index items 202 of water supply operation management DB 123B, for example, a number of cases of water purification plant stop accident for 10 years and a number of water purification plants are used to calculate a task index value of a water purification plant accident ratio.

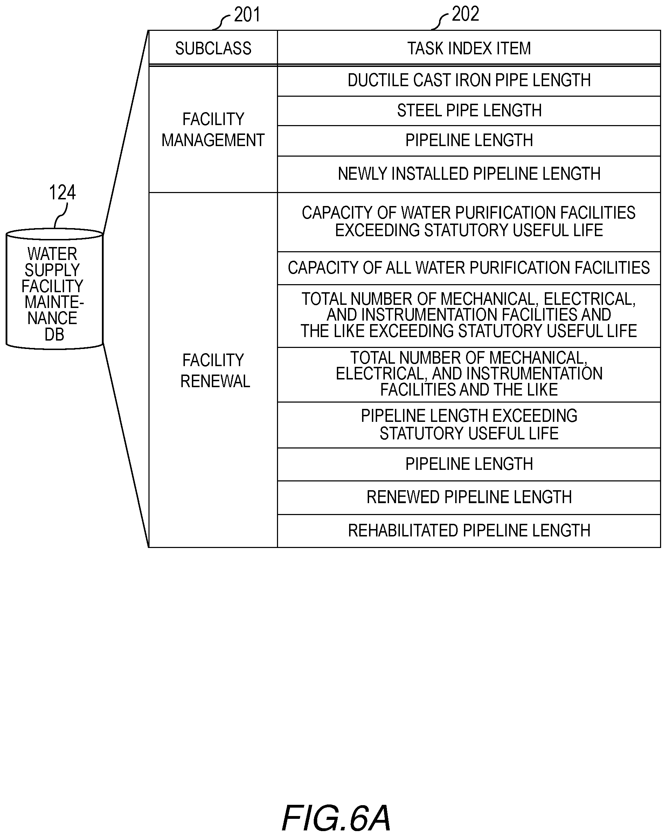

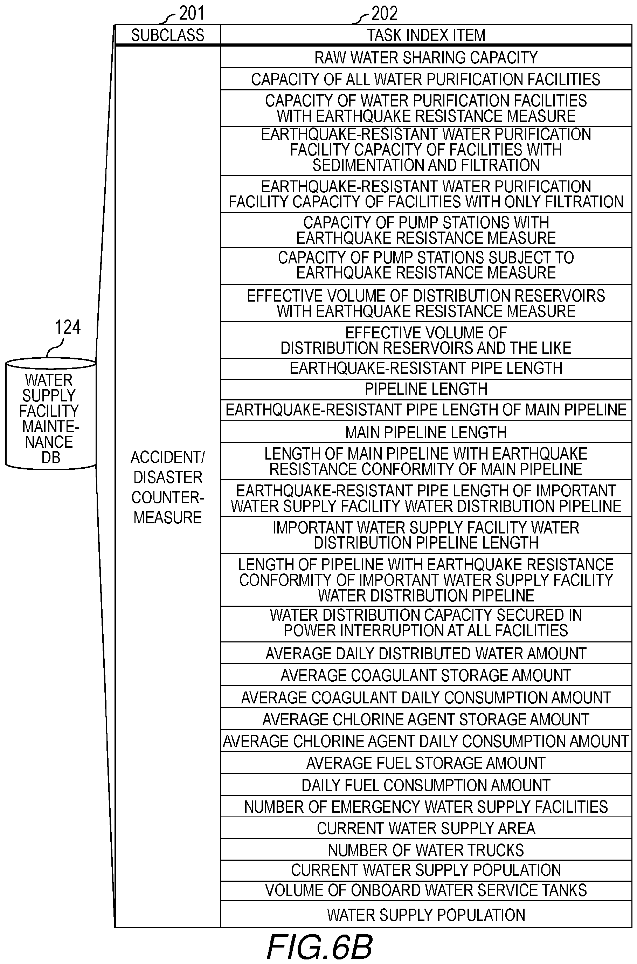

FIG. 6A and 6B are explanatory diagrams for illustrating an example of the water supply facility maintenance DB 124. The water supply facility maintenance DB 124 is a database for managing an operation of the supply of the water. In the case of the task index items 202 of the water supply facility maintenance DB 124, for example, a ductile cast iron pipe length, a steel pipe length, and a pipeline length are used to calculate a task index value of a ductile cast iron pipe/steel pipe ratio.

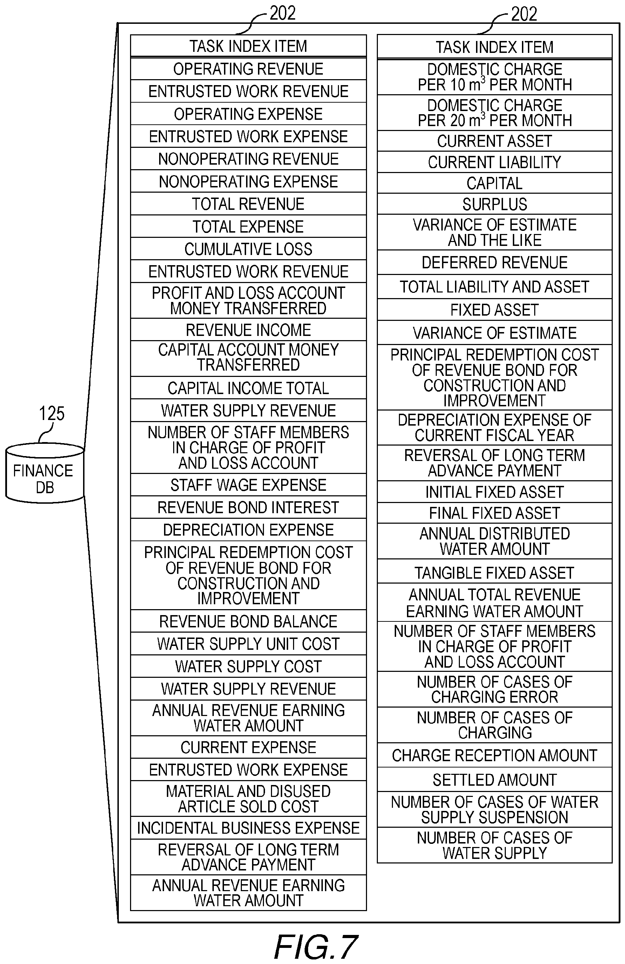

FIG. 7 is an explanatory diagram for illustrating an example of the finance DB 125. The finance DB 125 is a database for executing clerical work relating to financial affairs. In the case of the task index item 202 of the finance DB 125, for example, an operating revenue, an entrusted work revenue, an operating expense, and an entrusted work expense are used to calculate a task index value of an operating balance ratio.

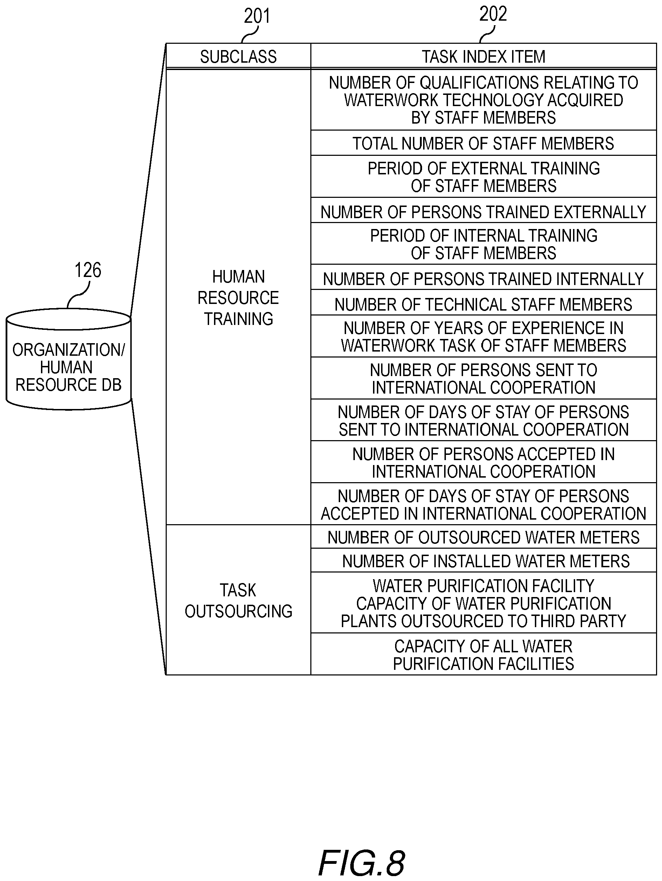

FIG. 8 is an explanatory diagram for illustrating an example of the organization/human resource DB 126. The organization/human resource DB 126 is a database for managing organizations and human resources. In the case of the task index items 202 of the organization/human resource DB 126, for example, a number of qualifications relating to waterwork technology acquired by staff members, and the total number of staff members are used to calculate a task index value of an acquisition degree of the qualifications relating to the waterwork technology.

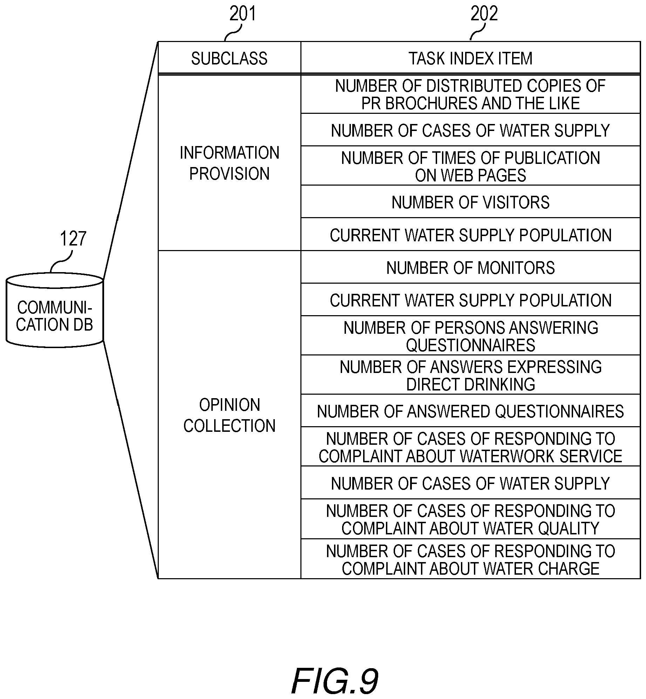

FIG. 9 is an explanatory diagram for illustrating an example of the communication DB 127. The communication DB 127 is a database for managing communication with visitors. In the case of the task index items 202 of the communication DB 127, for example, a number of distributed copies of PR brochures and the like and the number of cases of water supply are used to calculate a task index value of a degree of information provision through the PR brochures.

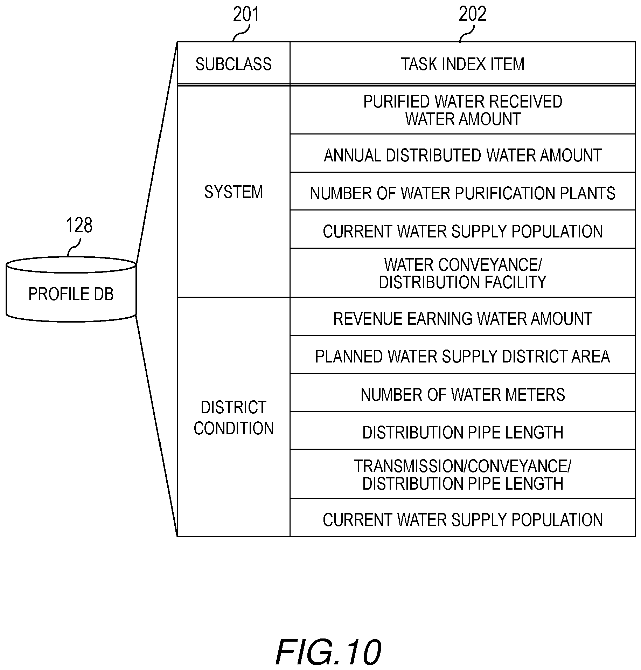

FIG. 10 is an explanatory diagram for illustrating an example of the profile DB 128. The profile DB 128 is a database for managing profiles of subjects (systems and district conditions) identified by categories. In the case of the task index items 202 of the profile DB 128, for example, a purified water received water amount and an annual distributed water amount are used to calculate a task index value of a purified water reception ratio.

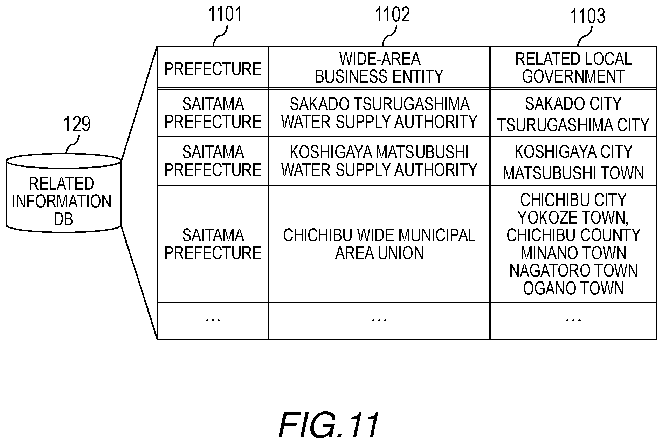

FIG. 11 is an explanatory diagram for illustrating an example of the related information DB 129. The related information DB 129 is a database for defining wide-area business entities 1102 existing in prefectures 1101 and local governments (hereinafter referred to as "related local governments") 1103 related to the wide-area business entities 1102. The wide-area business entity 1102 is a business entity which undertakes outsourced business of a plurality of related local governments 1103 across the plurality of related local governments 1103, and includes, for example, a corporate group and an area union. When the wide-area business entity 1102 is selected, a value of the task index item 202 is a sum of values of each task index item 202 of a plurality of related local governments corresponding to the wide-area business entity 1102.

Moreover, when one certain local government is selected, and this local government corresponds to a related local government 1103, the evaluation apparatus 100 may identify a corresponding wide-area business entity 1102. In this case, the evaluation device 100 may use not a value of the task index item 202 of this local government, but a sum of values of each task index item 202 of the plurality of related local governments corresponding to the wide-area business entity 1102.

### <Calculation Example of Task Index Value>

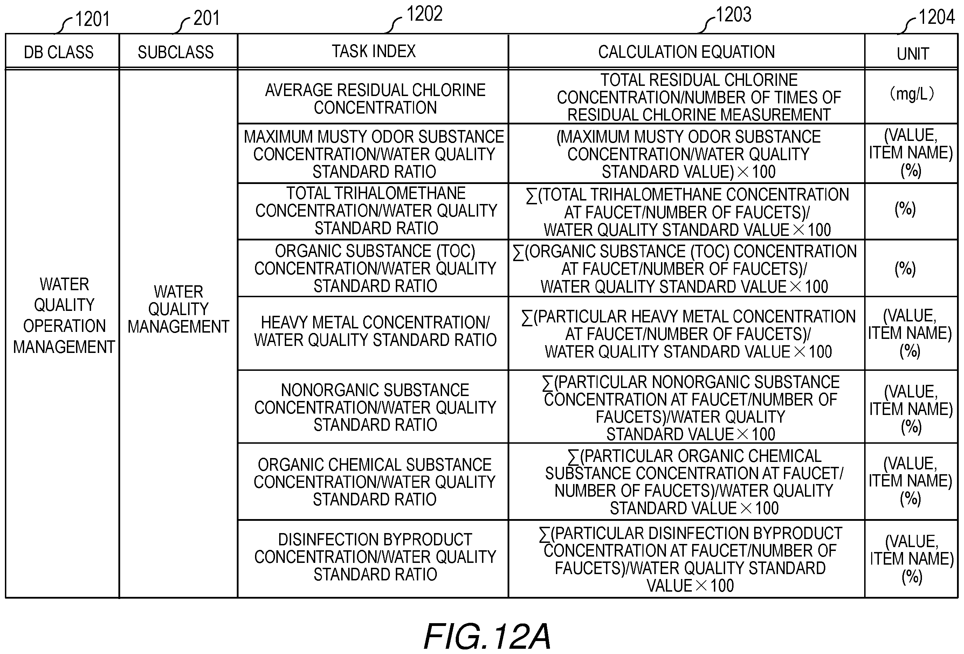

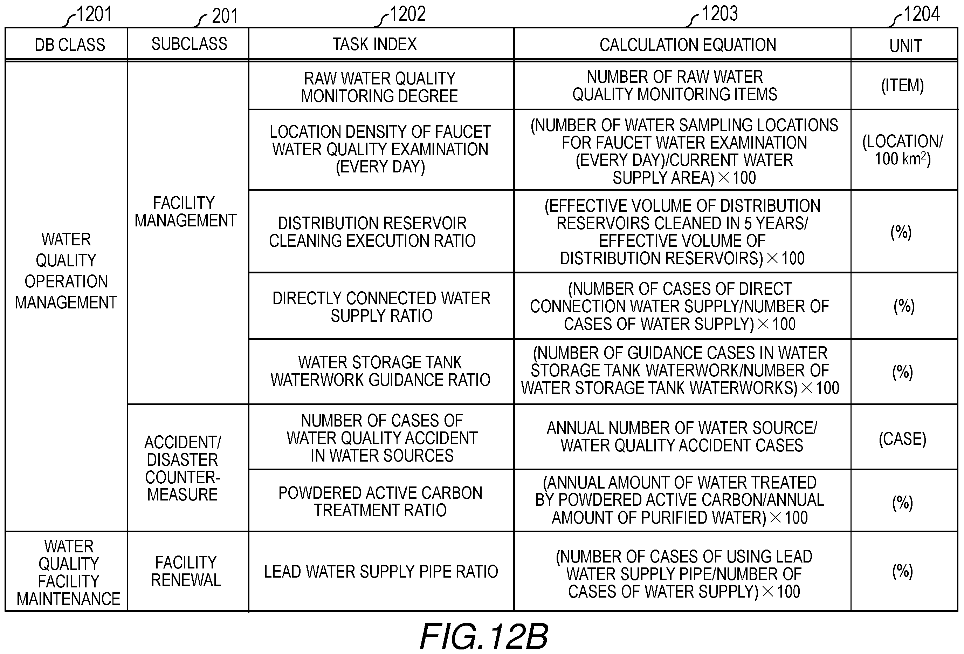

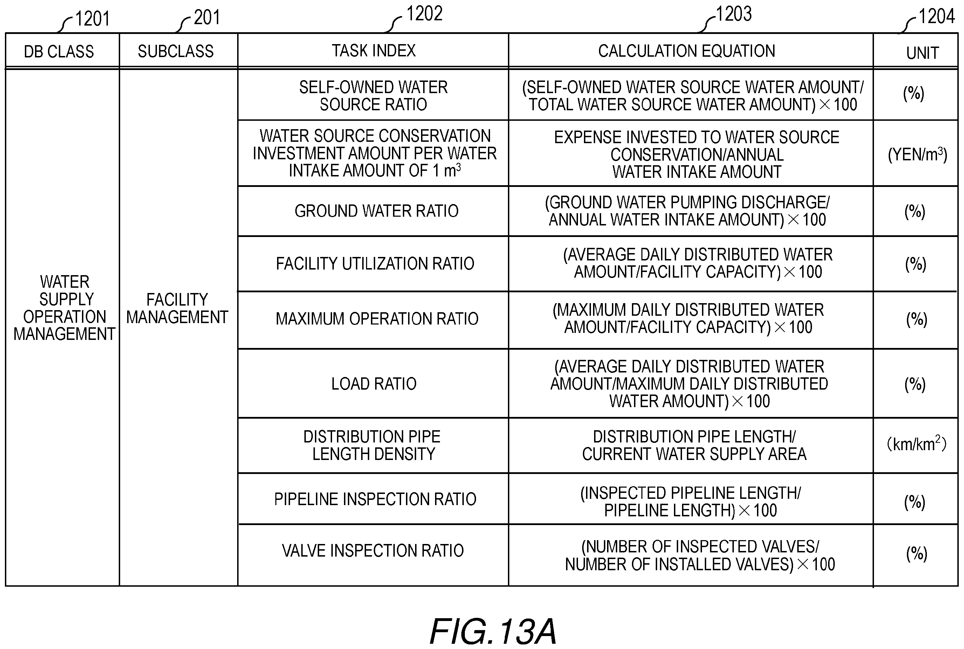

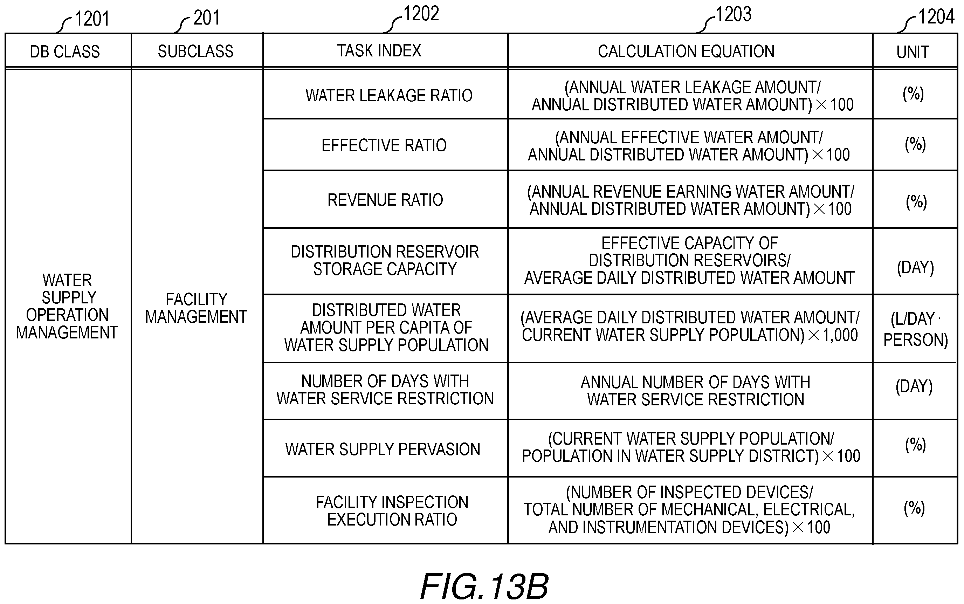

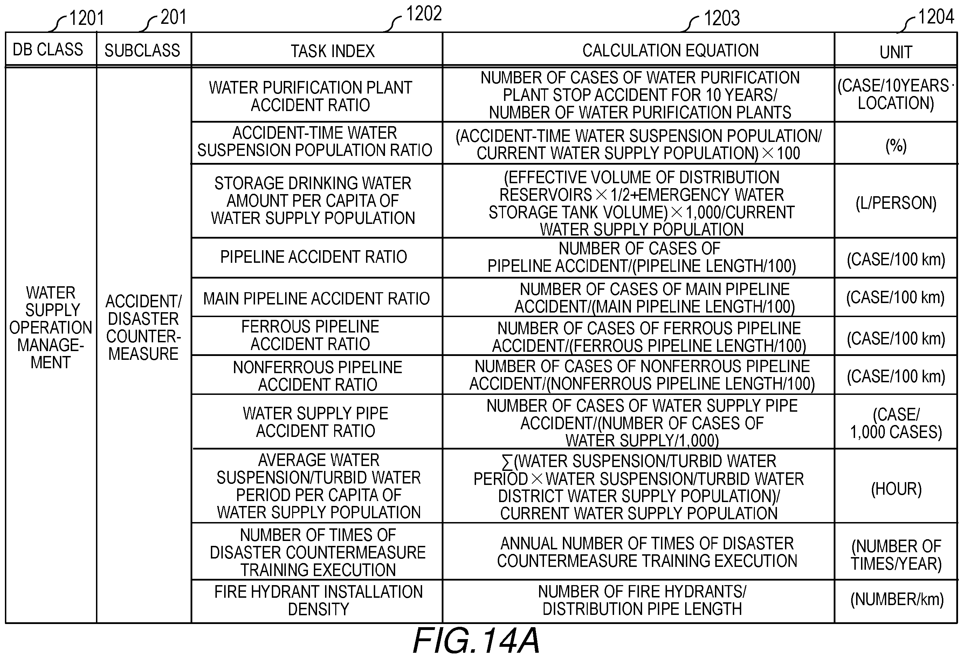

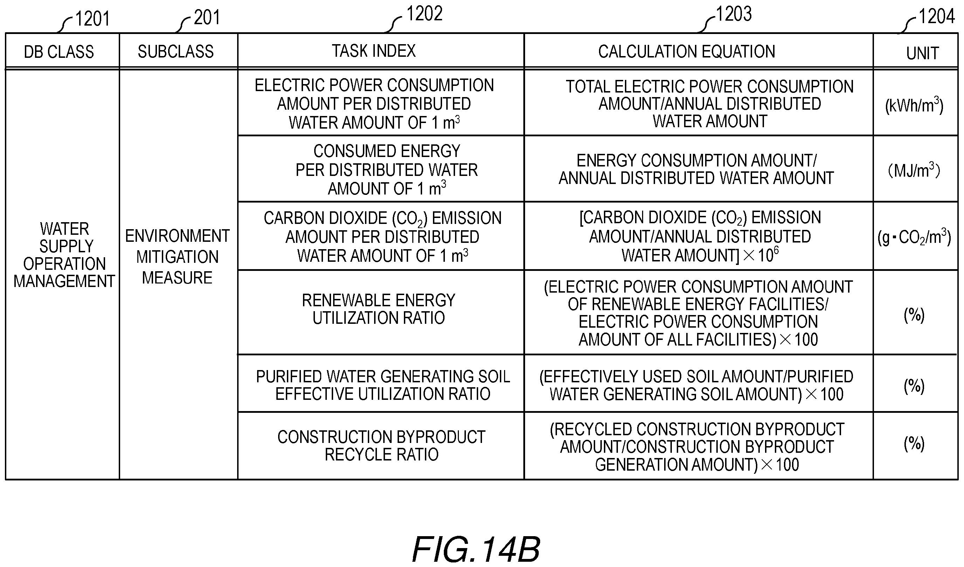

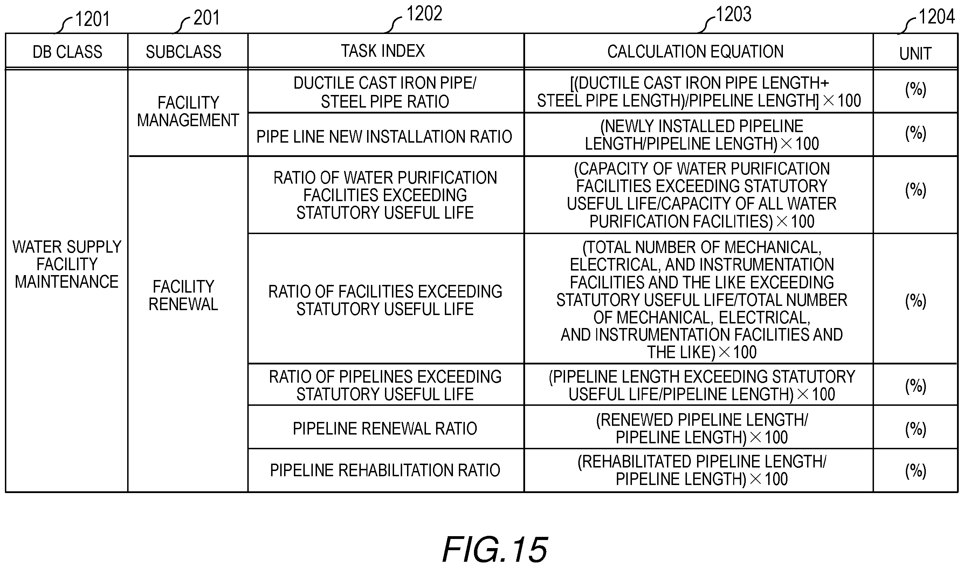

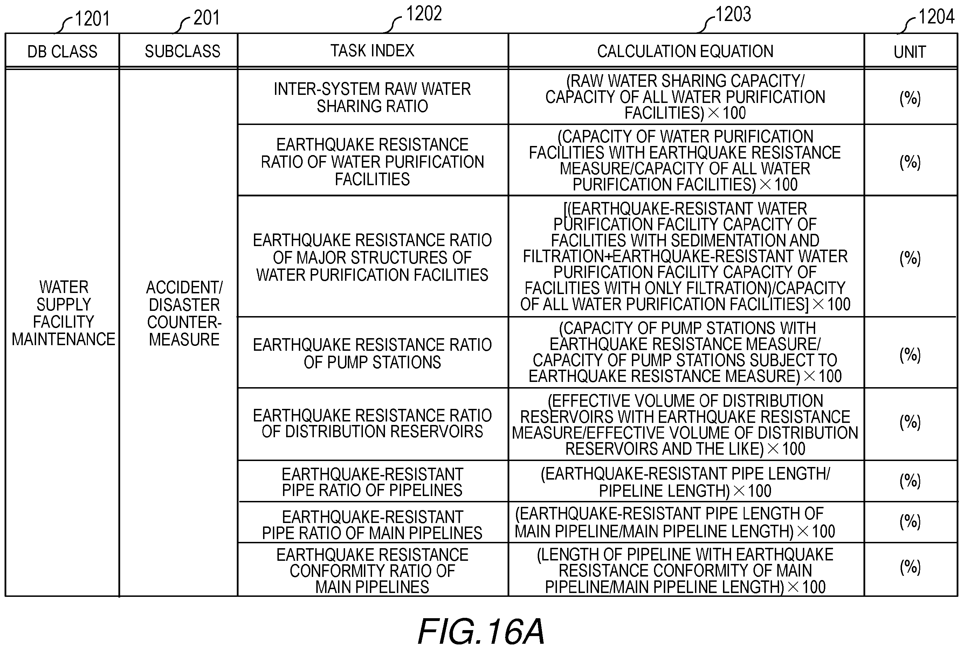

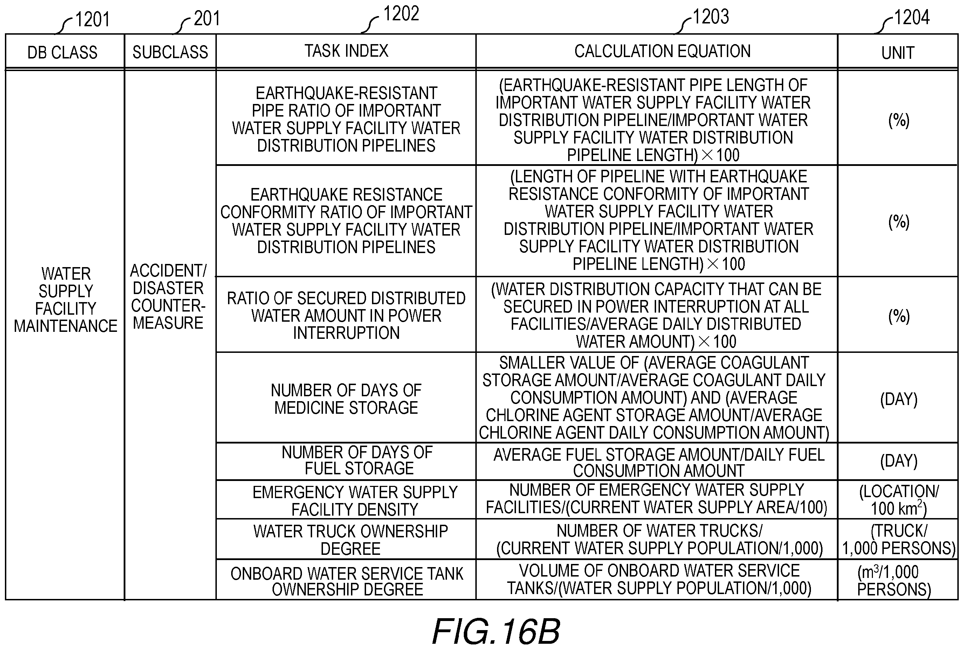

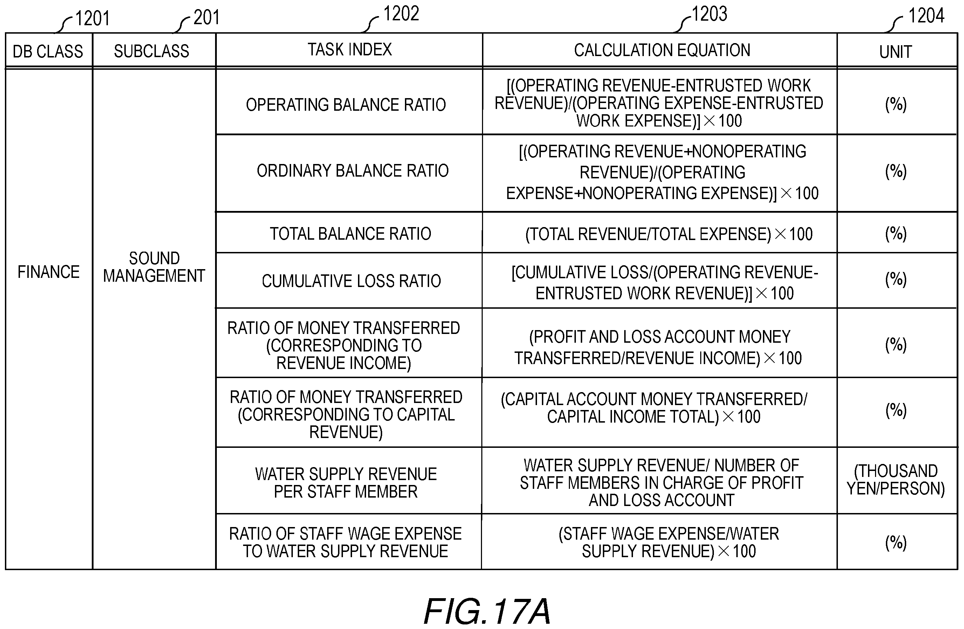

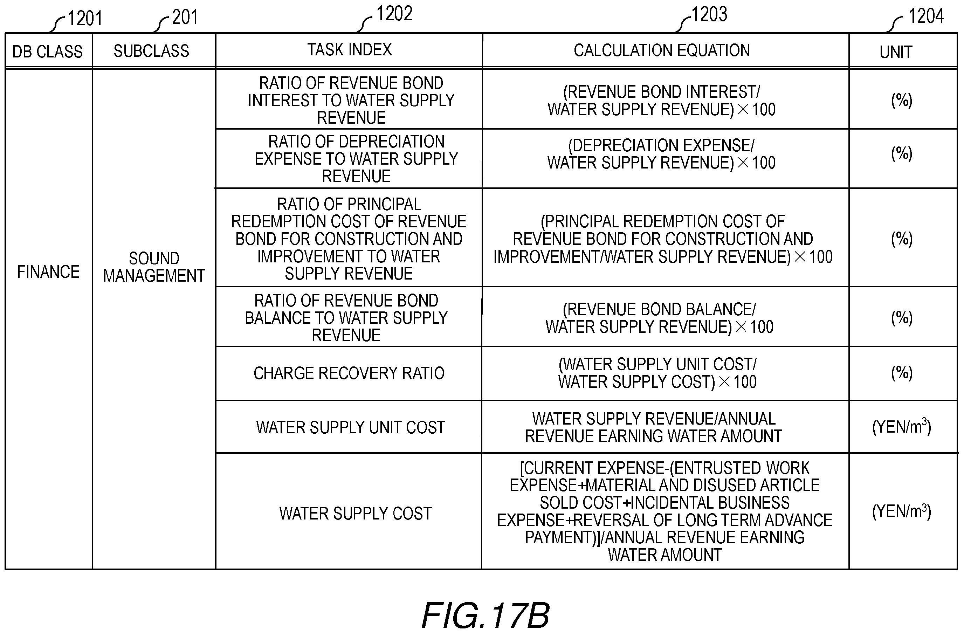

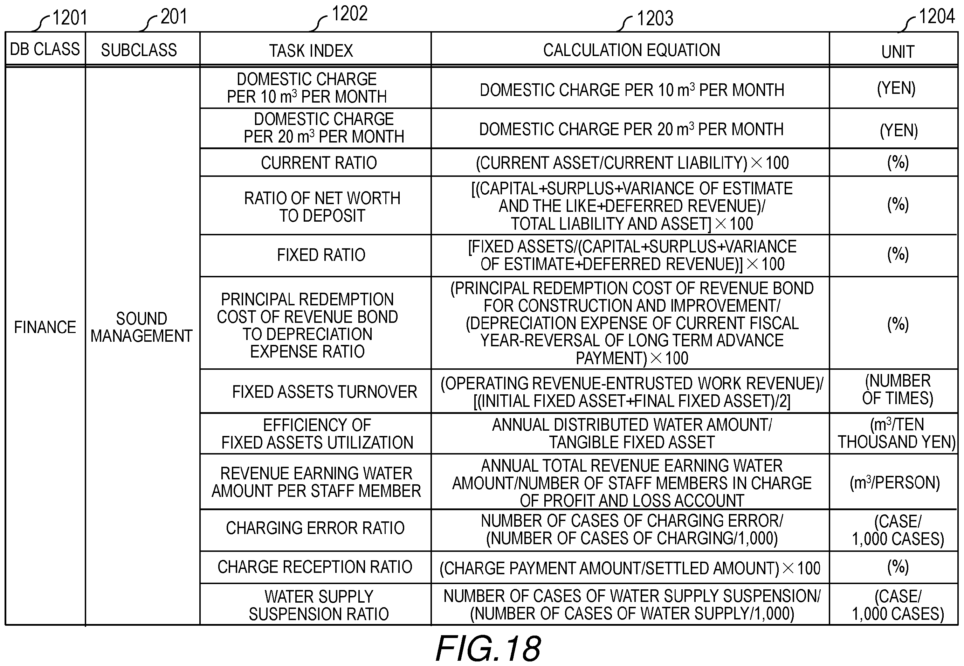

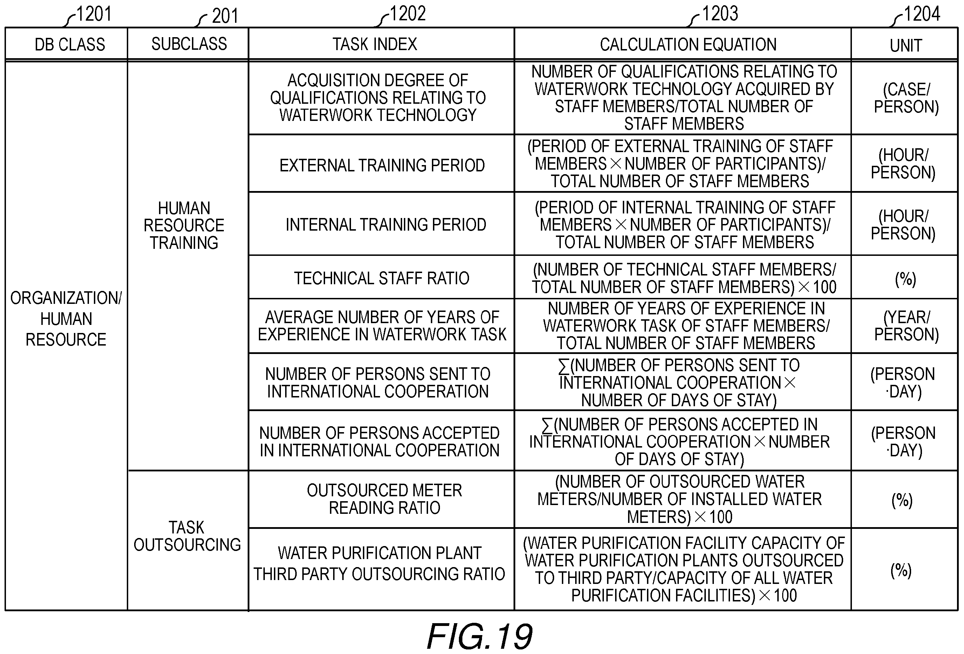

A calculation example of a task index value is now described. The evaluation apparatus 100 assigns values of the task index items 202 to a calculation equation corresponding to each of various task indices, to thereby calculate the value of each task index. FIGs. 12A to FIG. 19 are tables which summarize calculation contents of the task index values. The evaluation apparatus 100 calculates the various task index values in accordance with contents of FIG. 12 to FIG. 19.

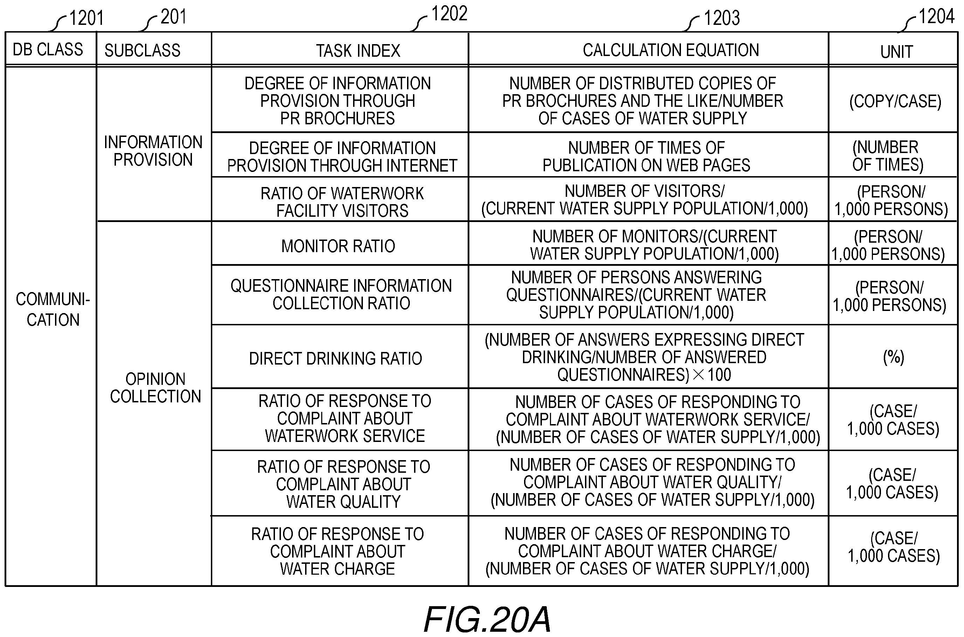

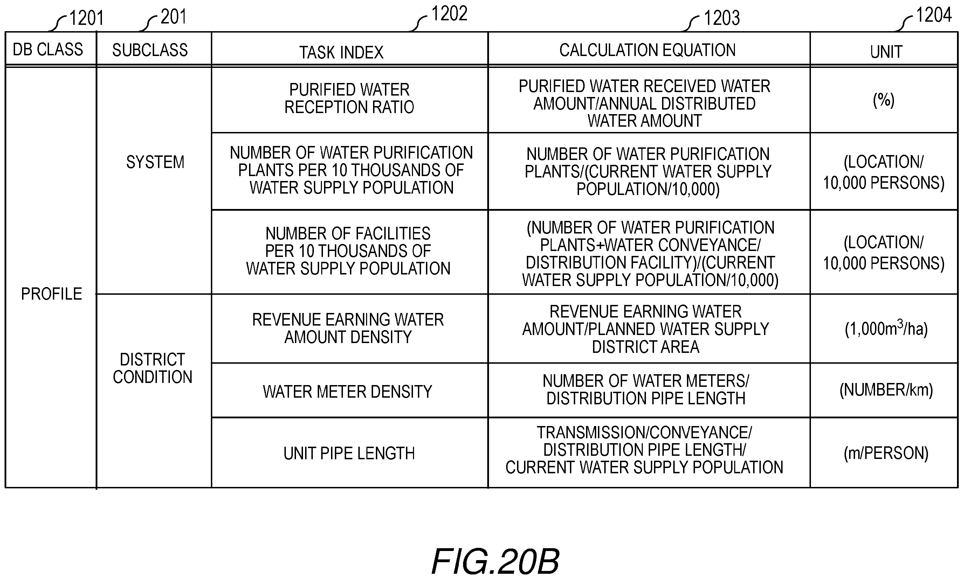

FIGs. 12A to FIG. 20 are a table 1 to a table 9 which summarize the calculation contents of the task index values. The evaluation apparatus 100 executes evaluation processing in accordance with the table 1 to the table 9. A DB class 1201 defines a database to which subclasses 201 are classified. For example, when the DB class 1201 is "water quality operation management," each of the task index values of corresponding subclasses 201 of "water quality management," "facility management," and "accident/disaster countermeasure" is calculated through use of the values of the task index items 202 of the water quality operation management DB.

A task index 1202 is an evaluation index defined by a calculation equation 1203 in order to quantify a subject task. The calculation equation 1203 is an equation for calculating a corresponding task index. A unit 1204 is a constant numerical amount serving as a reference of the value calculated through use of the calculation equation 1203.

### <Screen Example>

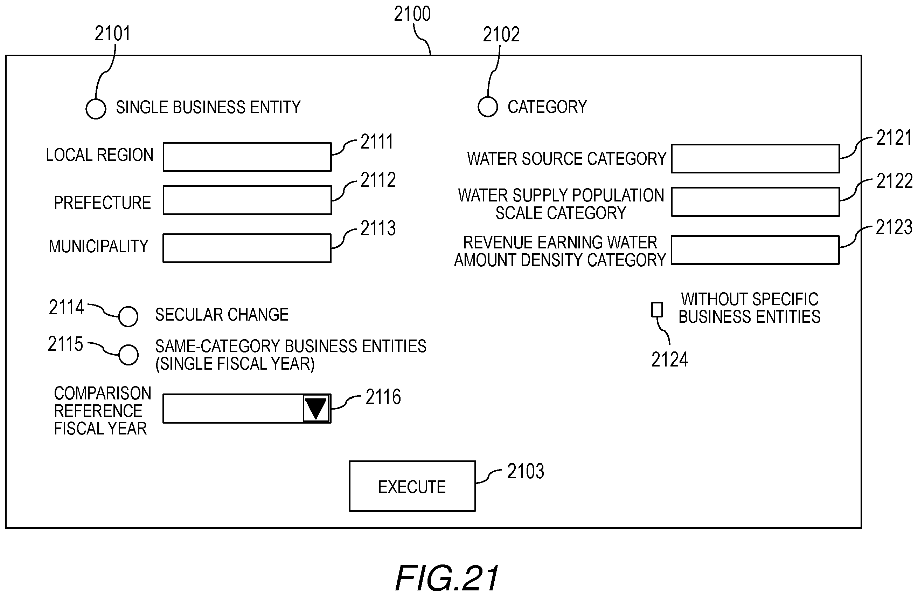

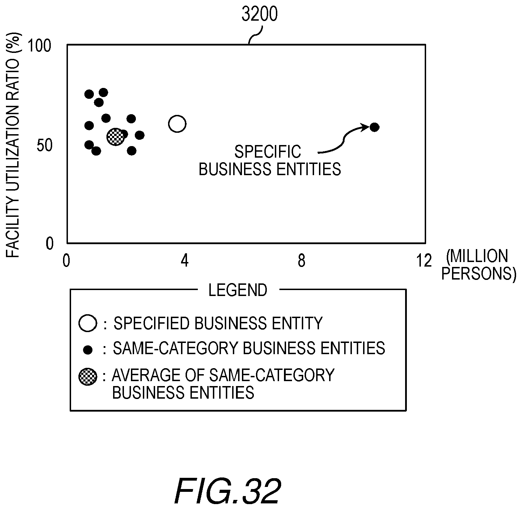

With reference to FIG. 21 to FIG. 33, description is now given of input screen examples and output screen examples of the evaluation apparatus 100. The input screen examples and the output screen examples of FIG. 21 to FIG. 33 may be displayed on a display being an example of the output device 104 of FIG. 1, or may be displayed on the output device 104 of another computer which can be accessed by the evaluation apparatus 100 through the communication IF 105.

FIG. 21 is an explanatory diagram for illustrating an example of the input screen. An input screen 2100 includes a single business entity radio button 2101, a local region input field 2111, a prefecture input field 2112, a municipality input field 2113, a secular change radio button 2114, a same-category business entity radio button 2115, a comparison reference fiscal year pulldown menu 2116, a category radio button 2102, a water source category input field 2121, a water supply population scale category input field 2122, a revenue earning water amount density category input field 2123, a checkbox 2124, and an execution button 2103.

The single business entity radio button 2101 is a radio button for selecting an evaluation for a single business entity. When the single business entity radio button 2101 is selected and input, selection input of the category radio button 2102 is reset.

The local region input field 2111 is an input field for receiving input of a local business entity name, such as Hokkaido, Tohoku, Kanto, Chubu, Kansai, Chugoku, Shikoku, Kyushu, and Okinawa (local regions in Japan). The local region input field 2111 may be a pulldown type for selecting those local business entity names.

The prefecture input field 2112 is an input field for receiving input of a business entity name of a prefecture. The prefecture input field 2112 may be a pulldown type for selecting the business entity names of the prefectures.

The municipality input field 2113 is an input field for receiving input of a business entity name of a municipality. The municipality input field 2113 may be a pulldown type or selecting the business entity names of the municipalities.

The secular change radio button 2114 is a radio button for selecting an evaluation based on a secular change. The number of years of the secular change is set to a predetermined number of years such as five years. The number of years of the secular change can be changed on a setting screen (not shown). When the secular change radio button 2114 is selected and input, selection input of the same-category business entity radio button 2115 is reset.

The same-category business entity radio button 2115 is a radio button fpr selecting an evaluation by comparing with same-category business entities. When the same-category business entity radio button 2115 is selected and input, selection input of the secular change radio button 2114 is reset.

The comparison reference fiscal year pulldown menu 2116 is a pulldown menu on which a comparison reference fiscal year can be selected. The comparison reference fiscal year is a fiscal year serving as a reference to be compared for the secular change or the same-category business entities. The evaluation apparatus 100 extracts the values of task index items 202 in the comparison reference fiscal year from the DB group 120 for the business entity (hereinafter referred to as "specified business entity") input to the local region input field 2111, the prefecture input field 2112, or the municipality input field 2113.

The category radio button 2102 is a radio button for selecting an evaluation of business entities categorized by business scales, such as a water source, a water supply population scale category, and a revenue earning water amount density category. When the category radio button 2102 is selected and input, the selection input of the single business entity radio button 2101 is reset.

The water source category input field 2121 is an input field for receiving input of a water source category. The water source category input field 2121 may be a pulldown type for selecting the water source category. The water source category is a classification based on a type of a water source being a major factor of determining a scale of a capital expense having a high ratio in a cost of a waterwork business at the time when the capital expense is focused. For example, there exist a business having dams as the major water source (identification information is "A"), a business having water reception as the major water source (identification information is "B"), a business having surface water (excluding dams) as the major water source (identification information is "C"), and a business having others (such as ground water and subsoil water) as the major water source (identification information is "D").

The water supply population scale category input field 2122 is an input field for receiving input of a water supply population scale category. The water supply population scale category input field 2121 may be a pulldown type for selecting the water supply population scale category. The water supply population scale category is a classification for categorizing, in terms of scale, population of persons who live in a water supply district and receive the water from the waterwork. For example, the categories include the metropolis and designated cities, a business having a water supply population equal to or larger than 300 thousand (identification information is "1"), a business having a water supply population equal to or larger than 150 thousand and smaller than 300 thousand (identification information is "2"), a business having a water supply population equal to or larger than 100 thousand and smaller than 150 thousand (identification information is "3"), a business having a water supply population equal to or larger than 50 thousand and smaller than 100 thousand (identification information is "4"), a business having a water supply population equal to or larger than 30 thousand and smaller than 50 thousand (identification information is "5"), a business having a water supply population equal to or larger than 15 thousand and smaller than 30 thousand (identification information is "6"), a business having a water supply population equal to or larger than 10 thousand and smaller than 15 thousand (identification information is "7"), a business having a water supply population equal to or larger than 5 thousand and smaller than 10 thousand (identification information is "8"), and a business having a water supply population smaller than 5 thousand (identification information is "9").

The revenue earning water amount density category input field 2123 is an input field for receiving input of a revenue earning water amount density category. The revenue earning water amount density category input field 2123 may be a pulldown type for selecting the revenue earning water amount density category. The revenue earning water amount density is an annual revenue earning water amount per area of 1 hectare of the water supply district. The revenue earning water amount density category is a classification based on the revenue earning water amount density. For example, the revenue earning water amount density category includes a business having a density equal to or higher than a national average (identification information is the identification information for the water source category (the letter remains in the upper case)) and a business having a density lower than the national average (identification information is the identification information for the water source category (the letter is changed to the lower case)).

For example, when a business for a certain municipality has the water source category having a dam as a main water source (identification information is "A"), the business has the water supply population scale category corresponding to the water supply population equal to or larger than 50 thousand and smaller than 100 thousand (identification information is "4"), and the business having a revenue earning water amount density category corresponding to a density lower than the national average, the classification category of this municipality is "a4."

The checkbox 2124 is a checkbox for selecting whether or not specific business entities are excluded. The specific business entities are business entities likely to be a subject of exclusion, and are set in advance. A reason for the exclusion is that the business entities are too large in business scale and population scale compared with other business entities. For example, the Tokyo metropolis corresponds to the specific business entity. When a checkmark is input to the checkbox 2124, the task index items 202 of the specific business entities are excluded.

The execution button 2103 is a button for starting execution of the processing of the evaluation apparatus 100 through use of the information input to the input screen 2100 when the execution button 2103 is pressed.

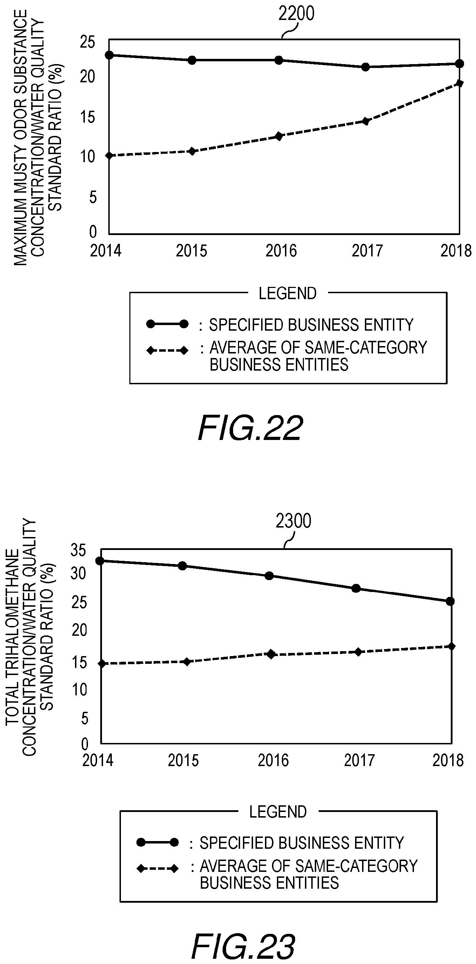

FIG. 22 to FIG. 26 are explanatory diagrams for illustrating an output screen example 1 to an output screen example 5 of the secular changes. Output screens 2200, 2300, 2400, 2500, and 2600 are output screens at the time when the single business entity radio button 2101 and the secular change radio button 2114 are selected, and are graphs for showing secular changes in task indices of the specified business entity and an average of the same-category business entities for the past five years. It should be noted that the average is an example, and may be another statistical value other than the average, such as a median, a maximum value, or a minimum value as long as the value represents values of the task index 1202 of one or more same-category business entities.

The same-category business entity is a business entity classified into the same scale category as the specified business entity. Specifically, the same scale category is a class categorized in terms of, for example, magnitudes of a population and a population density, the above-mentioned water supply population, a land area, a region for which the business entity is responsible, and a population and a population density in the region. The category to be applied is set in advance, and this setting can be changed on a setting screen (not shown).

Horizontal axes of the output screens 2200, 2300, 2400, 2500, and 2600 indicate last five fiscal years, and vertical axes indicate respective task indices 1202. The task index 1202 of the output screen 2200 is a maximum musty odor substance concentration/water quality standard ratio. The task index 1202 of the output screen 2300 is a total trihalomethane concentration/water quality standard ratio. The task index 1202 of the output screen 2400 is an organic substance (TOC) concentration/water quality standard ratio. The task index 1202 of the output screen 2500 is a heavy metal concentration/water quality standard ratio. The task index 1202 of the output screen 2600 is a nonorganic substance concentration/water quality standard ratio.

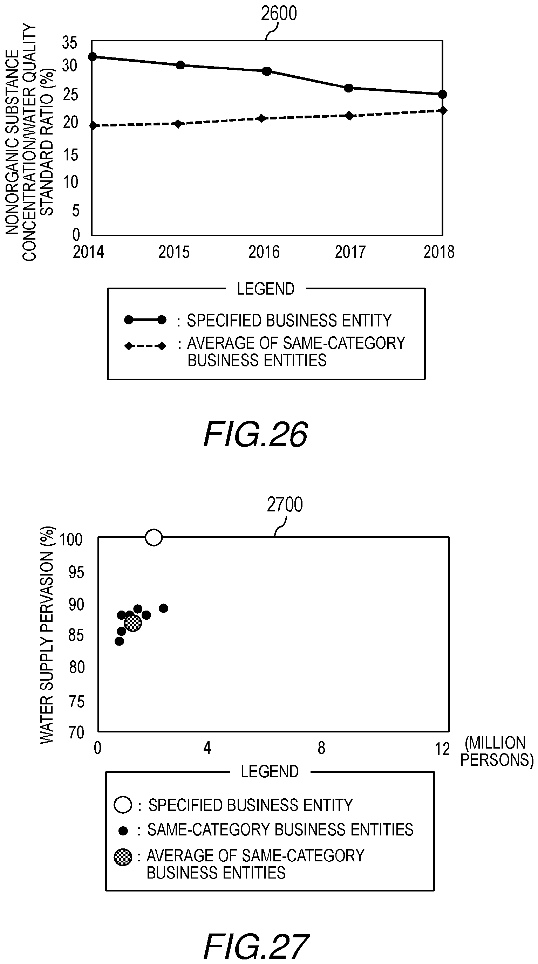

FIG. 27 to FIG. 32 are explanatory diagrams for illustrating an output screen example 1 to an output screen example 6 for a single business entity. Output screens 2700, 2800, 2900, 3000, 3100, and 3200 are output screens at the time when the single business entity radio button 2101 and the same-category business entity radio button 2115 are selected, and are graphs for showing task indices 1202 for a specified business entity and same-category business entities in a certain comparison reference fiscal year.

Horizontal axes of the output screens 2700, 2800, 2900, 3000, 3100, and 3200 indicate populations of the business entities, and vertical axes indicate respective task indices 1202. The task index 1202 of the output screen 2700 is a water supply pervasion. The task index 1202 of the output screen 2800 is a water supply population scale. The task index 1202 of the output screen 2900 is the operating balance ratio. The task index 1202 of the output screen 3000 is a revenue ratio. The task index 1202 of the output screen 3100 is a water leakage ratio. The task index 1202 of the output screen 3200 is a facility utilization ratio.

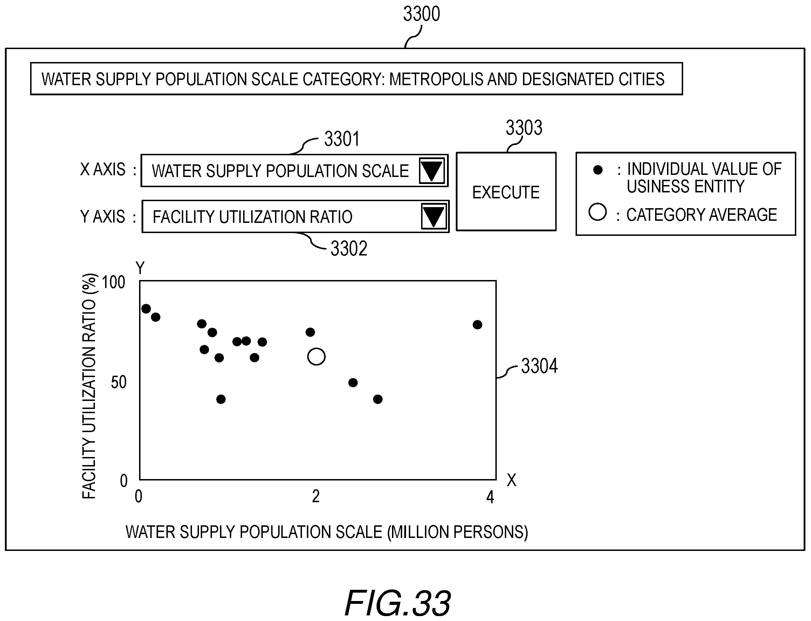

FIG. 33 is an explanatory diagram for illustrating an example of an output screen for the category. The output screen 3300 is an output screen at the time when the category radio button 2102 is selected, and is a graph for showing task indices 1202 in a certain category in a certain comparison reference fiscal year, for example. The output screen 3300 is an output screen at the time when "the metropolis and designated cities" is input to the water supply population scale category input field 2122.

The output screen 3300 includes an X-axis pulldown menu 3301, a Y-axis pulldown menu 3302, an execution button 3303, and a graph 3304. Each of the X-axis pulldown menu 3301 and the Y-axis pulldown menu 3302 is a pulldown menu on which the task index 1202 can be selected. The execution button 3303 is a button for generating the graph 3304 for a combination of the task indices 1202 selected by the X-axis pulldown menu 3301 and the Y-axis pulldown menu 3302 when the execution button 3303 is pressed. The graph 3304 is a graph on which values of the task indices 1202 selected by the X-axis pulldown menu 3301 and the Y-axis pulldown menu 3302 are plotted for the classification category specified in the water source category input field 2121, the water supply population scale category input field 2122, and the revenue earning water amount density category input field 2123.

### <Example of Evaluation Processing Procedure>

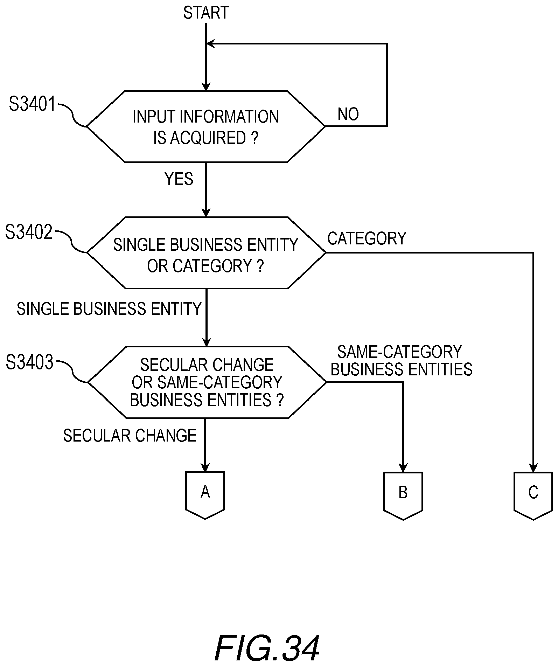

With reference to FIG. 34 to FIG. 37, description is now given of an example of an evaluation processing procedure executed by the evaluation apparatus 100.

FIG. 34 is a flowchart 1 for illustrating the example of the evaluation processing procedure executed by the evaluation apparatus 100. The evaluation apparatus 100 waits for acquisition of input information (No in Step S3401). The input information is information input on the input screen 2100, and is acquired through the pressing of the execution button 2103. When the input information is acquired (Yes in Step S3401), the evaluation apparatus 100 determines whether an evaluation perspective for the business entities requested through the input information is the evaluation perspective in terms of the single business entity or the evaluation perspective in terms of the category (Step S3402). Specifically, for example, the evaluation apparatus 100 determines whether the input information includes the selection through the single business entity radio button 2101 or the selection through the category radio button 2102.

When the evaluation perspective in terms of the single business entity is selected ("single business entity" in Step S3402), the evaluation apparatus 100 determines whether the evaluation perspective is the evaluation perspective in terms of the secular change or the evaluation perspective in terms of the same-category business entities (Step S3403). Specifically, for example, the evaluation apparatus 100 determines whether the input information includes the selection through the secular change radio button 2114 or the selection through the same-category business entities radio button 2115.

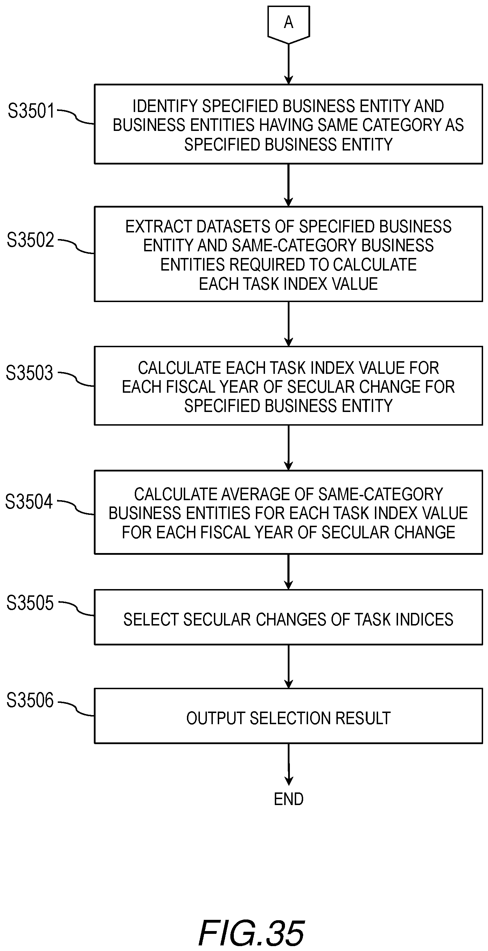

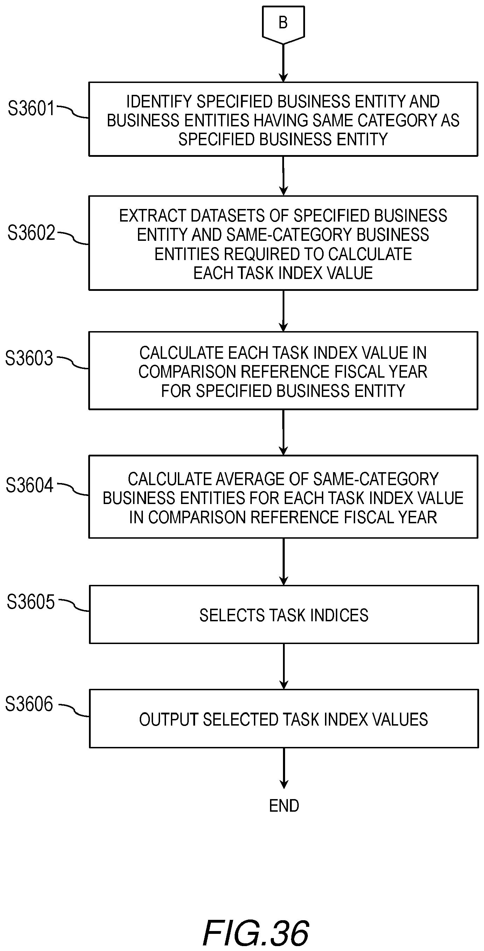

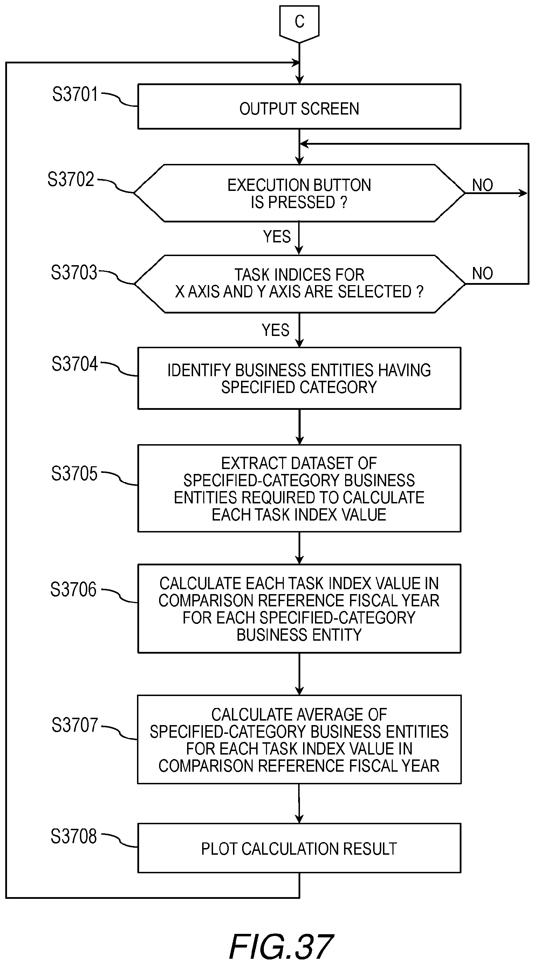

When the evaluation perspective in terms of the secular change is selected ("secular change" in Step S3403), the process proceeds to Step S3501 of FIG. 35. Meanwhile, when the evaluation perspective in terms of the same-category business entities ("same-category business entities" in Step S3403), the process proceeds to Step S3601 of FIG. 36. Moreover, when the evaluation perspective in terms of the category is selected in Step S3402 ("category" in Step S3402), the process proceeds to Step S3701 of FIG. 37.

FIG. 35 is a flowchart 2 for illustrating the example of the evaluation processing procedure executed by the evaluation apparatus 100. When the evaluation perspective in terms of the secular change is selected ("secular change" in Step S3403), the evaluation apparatus 100 identifies a specified business entity and business entities having the same category as that of the specified business entity (Step S3501). Specifically, for example, the evaluation apparatus 100 identifies business entities (same-category business entities) classified into the same scale category as that of the specified business entity based on values of a task index item 202 (for example, a current water supply population) of the DB group 120.

For example, when the current water supply population is classified into a plurality of scale categories based on the magnitude of this population, business entities belonging to the same scale category as the scale category to which the specified business entity belongs are identified as the same-category business entities. As a result, it is possible to exclude business entities having scale categories different from that of the specified business entity, thereby being capable of reducing a calculation load.

Moreover, when the same-category business entity is a wide-area business entity, the evaluation apparatus 100 may refer to the related information DB 129, to thereby identify a plurality of related local governments corresponding to this same-category business entity. The DB group 120 includes a value of the task index item for each local government, and hence the value of the task index item 202 can be used through the identification of the related local government.

Similarly, when the specified business entity is a wide-area business entity as well, the evaluation apparatus 100 may refer to the related information DB 129, to thereby identify a plurality of related local governments corresponding to this specified business entity. The DB group 120 includes a value of the task index item for each local government, and hence the value of the task index item 202 can be used through the identification of the related local government.

After that, the evaluation apparatus 100 extracts datasets of the specified business entity and the same-category business entities required to calculate the value of each task index 1202 (Step S3502). Specifically, for example, the evaluation apparatus 100 extracts, from the DB group 120 (except for the related information DB 129), the values of each task index item 202 for the last five years which are defined through the secular change, and start from the comparison reference fiscal year for each of the specified business entity and the same-category business entities, and acquires the values as the dataset for the specified business entity and the dataset for the same-category business entities.

When the specified business entity and the same-category business entities are wide-area business entities, the evaluation apparatus 100 sums values of the same task index items 202 of a corresponding plurality of related local governments for each of the wide-area business entity, to thereby obtain a dataset as the wide-area business entity.

After that, the evaluation apparatus 100 calculates, for the specified business entity, the value of each task index 1202 for each fiscal year of the secular change (Step S3503). Specifically, for example, the evaluation apparatus 100 uses the dataset acquired in Step S3502 to calculate the value of the task index 1202 in accordance with the calculation equation 1203 for each fiscal year defined in the secular change.

Moreover, the evaluation apparatus 100 calculates the average of the values of each task index 1202 for the same-category business entities for each fiscal year of the last five years which are defined in the secular change, and start from the comparison reference fiscal year (Step S3504). Also in this case, the evaluation apparatus 100 uses the dataset acquired in Step S3502 to calculate the value of the task index 1202 in accordance with the calculation equation 1203 for each same-category business entity, and calculates an average of the same-category business entities for each fiscal year.

After that, the evaluation apparatus 100 selects each of the secular changes of the task indices 1202 as an output subject or a non-output subject based on a predetermined evaluation criterion (Step S3505). Specifically, for example, the values of the task index 1202 are calculated for each task index 1202 in Step S3503 and Step S3504, and hence, if all of those values are to be output, the amount of those values are enormous. Thus, the evaluation apparatus 100 selects the secular changes of the task indices 1202 to be output in accordance with the predetermined evaluation criterion.

For example, as illustrated in FIG. 22 to FIG. 24 and FIG. 26, when a difference between a value of a task index 1202 of the specified business entity and an average for the task index 1202 of the same-category business entities tends to decrease as the fiscal years pass, the evaluation apparatus 100 selects the secular change in this task index 1202 as the output subject. As a result, the user can grasp that the value of the task index 1202 of the specified business entity and the average of the task index 1202 of the same-category business entities approach each other as the fiscal years pass.

Specifically, for example, when a difference between a value of a task index 1202 of the specified business entity larger than an average for the task index 1202 of the same-category business entities and the average for the task index 1202 of the same-category business entities tends to decrease as the fiscal years pass, the evaluation apparatus 100 may select the secular change of this task index 1202 as the output subject. As a result, the user can grasp that the average of the same-category business entities tends to reach the value of the specified business entity in this task index 1202 as the fiscal years pass.

Specifically, for example, when a difference between a value of a task index 1202 of the specified business entity smaller than an average for the task index 1202 of the same-category business entities and the average for the task index 1202 of the same-category business entities tends to decrease as the fiscal years pass, the evaluation apparatus 100 may select the secular change of this task index 1202 as the output subject. As a result, the user can grasp that the value of the specified business entity tends to reach the average of the same-category business entities in this task index 1202 as the fiscal years pass.

Meanwhile, when a difference between a value of a task index 1202 of the specified business entity and the average for the task index 1202 of the same-category business entities tends to increase as the fiscal years pass, the evaluation apparatus 100 may select the secular change of this task index 1202 as the output subject. As a result, the user can grasp that the difference in the task index 1202 between the specified business entity and the same-category business entities increases as the fiscal years pass.

Specifically, for example, when a difference between a value of a task index 1202 of the specified business entity larger than an average for the task index 1202 of the same-category business entities and the average for the task index 1202 of the same-category business entities tends to increase as the fiscal years pass, the evaluation apparatus 100 may select the secular change of this task index 1202 as the output subject. As a result, the user can grasp that the average of the same-category business entities tends to fall behind the value of the specified business entity in this task index 1202 as the fiscal years pass.

Specifically, for example, when a difference between a value of a task index 1202 of the specified business entity smaller than an average for the task index 1202 of the same-category business entities and the average for the task index 1202 of the same-category business entities tends to increase as the fiscal years pass, the evaluation apparatus 100 may select the secular change of this task index 1202 as the output subject. As a result, the user can grasp that the value of the specified business entity tends to fall behind the average of the same-category business entities in this task index 1202 as the fiscal years pass.

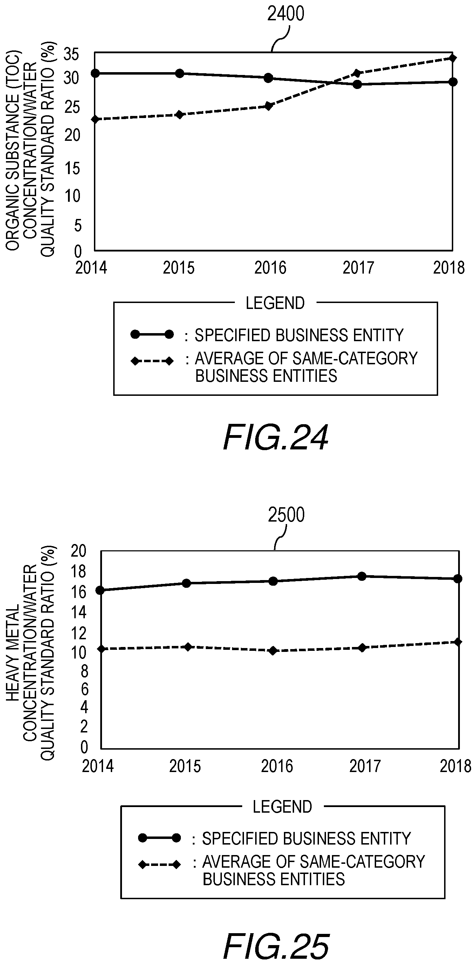

Moreover, as illustrated in FIG. 25, when a relationship in magnitude between a value of a task index 1202 of the specified business entity and an average for the task index 1202 of the same-category business entities in the course of the secular change of the task index 1202 tends to switch, the evaluation apparatus 100 may select the secular change of this task index 1202 as the output subject. As a result, the user can grasp that the value of the task index 1202 of the specified business entity and the average for the task index 1202 of the same-category business entities are switched in the course of the secular change of the task index 1202.

Specifically, for example, when a value of a task index 1202 of the specified business entity larger than an average for the task index 1202 of the same-category business entities becomes smaller than the average for the task index 1202 of the same-category business entities in the course of the secular change in the task index 1202, the evaluation apparatus 100 selects the secular change of this task index 1202 as the output subject. As a result, the user can grasp that the value of the task index 1202 of the specified business entity is exceeded by the average for the task index 1202 of the same-category business entities in the course of the secular change of the task index 1202.

Specifically, for example, when a value of a task index 1202 of the specified business entity smaller than an average for the task index 1202 of the same-category business entities becomes larger than the average for the task index 1202 of the same-category business entities in the course of the secular change in the task index 1202, the evaluation apparatus 100 selects the secular change of this task index 1202 as the output subject. As a result, the user can grasp that the value of the task index 1202 of the specified business entity exceeds the average for the task index 1202 of the same-category business entities in the course of the secular change of the task index 1202.

After that, the evaluation apparatus 100 outputs a selection result (secular changes in task indices 1202 selected as the output subjects) acquired in Step S3505 (Step S3506). The evaluation apparatus 100 may display the selection result on the display being the output device 104, may output to a printer for printing, or may transmit the selection result to another computer which can be accessed through the communication IF 105.

FIG. 36 is a flowchart 3 for illustrating the example of the evaluation processing procedure executed by the evaluation apparatus 100. When the evaluation perspective in terms of the same-category business entities is selected ("same-category business entities" in Step S3403), the evaluation apparatus 100 identifies a specified business entity and business entities having the same category as that of the specified business entity (Step S3601). Step S3601 is the same as Step S3501, and a detailed description is thus omitted.

After that, the evaluation apparatus 100 extracts datasets of the specified business entity and the same-category business entities required to calculate the value of each task index 1202 (Step S3602). Specifically, for example, the evaluation apparatus 100 extracts, from the DB group 120 (except for the related information DB 129), the values of the task index item 202 in the comparison reference fiscal year for each of the specified business entity and the same-category business entities, and acquires the values as the dataset for the specified business entity and the dataset for the same-category business entities.

When the specified business entity and the same-category business entities are wide-area business entities, the evaluation apparatus 100 sums values of the same task index item 202 of a corresponding plurality of related local governments for each of the wide-area business entity, to thereby obtain a dataset as the wide-area business entity.

After that, the evaluation apparatus 100 calculates, for the specified business entity, the value of each task index 1202 in the comparison reference fiscal year (Step S3603). Specifically, for example, the evaluation apparatus 100 uses the dataset acquired in Step S3602 to calculate the value of the task index 1202 in accordance with the calculation equation 1203.

Moreover, the evaluation apparatus 100 calculates the average of the values of each task index 1202 for the same-category business entities in the comparison reference fiscal year (Step S3604). Also in this case, the evaluation apparatus 100 uses the dataset acquired in Step S3602 to calculate the value of the task index 1202 in accordance with the calculation equation 1203 for each same-category business entity, and calculates an average of the same-category business entities.

After that, the evaluation apparatus 100 selects each of the task indices 1202 as an output subject or a non-output subject based on a predetermined evaluation criterion (Step S3605). Specifically, for example, the values of the task index 1202 are calculated for each task index 1202 in Step S3603 and Step S3604, and hence, if all of those values are to be output, the amount of those values are enormous. Thus, the evaluation apparatus 100 selects the task indices 1202 to be output in accordance with the predetermined evaluation criterion.

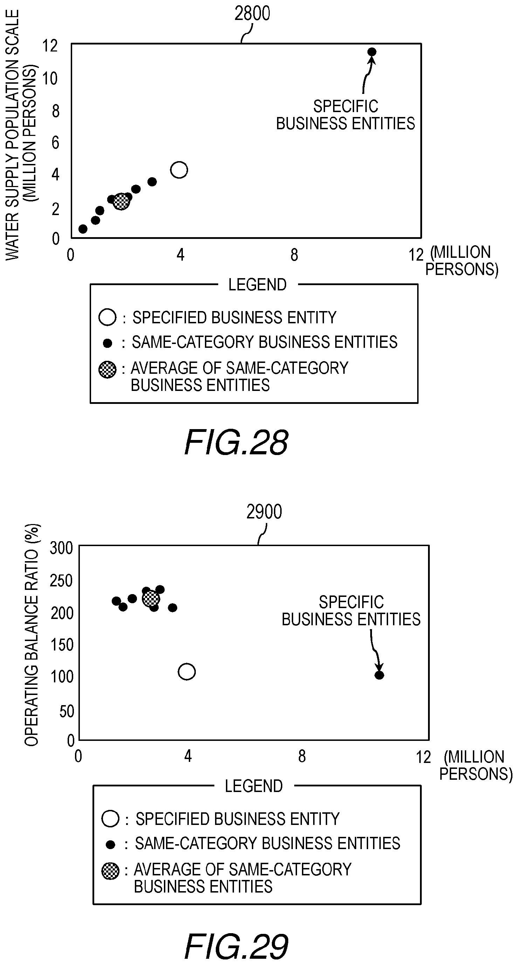

For example, when, in the same task index 1202, a difference equal to or larger than a threshold value t1 exists between a value of a specified business entity and an average of the same-category business entities, the evaluation apparatus 100 selects this task index 1202 as the output subject. In this case, as illustrated in FIG. 27, when the value of the specified business entity is larger than the average of the same-category business entities, the user can grasp that the specified business entity leads the same-category business entities in this task index 1202. Meanwhile, as illustrated in FIG. 29, when the value of the specified business entity is smaller than the average of the same-category business entities, the user can grasp that the specified business entity falls behind the same-category business entities in this task index 1202.

Moreover, as illustrated in FIG. 28, when the value of the specified business entity is equal to or higher than a value at a predetermined order of the values of the same-category business entities for the same task index 1202, the evaluation apparatus 100 selects this task index 1202 as the output subject. In this case, the user can grasp that the specified business entity is ranked at a relatively high order among the same-category business entities.

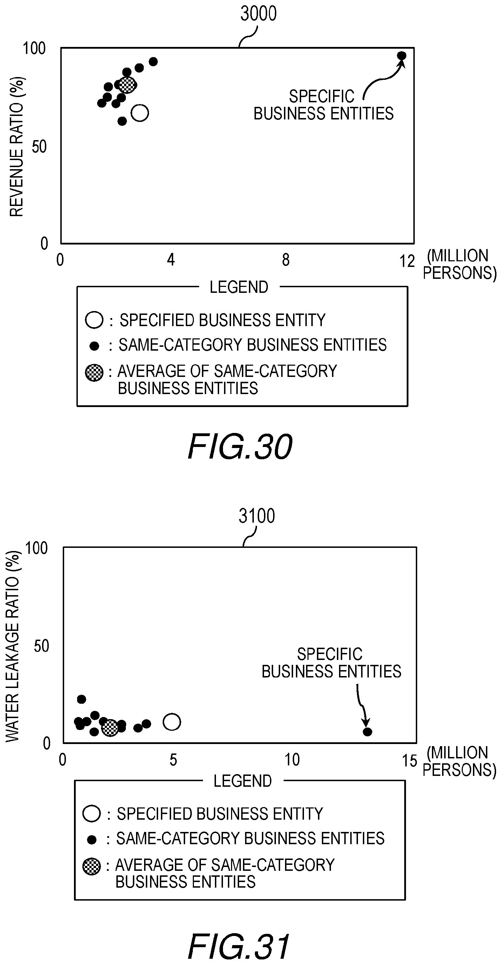

Moreover, as illustrated in FIG. 30, when the value of the specified business entity is equal to or lower than a value at a predetermined order of the values of the same-category business entities for the same task index 1202, the evaluation apparatus 100 selects this task index 1202 as the output subject. In this case, the user can grasp that the specified business entity is ranked at a relatively low order among the same-category business entities.

Moreover, in the case in which the checkmark is not input to the checkbox 2124, when the specified category is the metropolis and the designated cities, the specific business entity such as Tokyo metropolis is also included in the same-category business entities. In this case, as illustrated in FIG. 29, FIG. 31, and FIG. 32, when a difference between a value of a task index 1202 of a specified business entity and a value of the task index 1202 of the specific business entity is within a threshold value t2, the evaluation apparatus 100 may select this task index 1202 as the output subject. As a result, the user can grasp that the task index 1202 of the specified business entity is equivalent to that of the specific business entity.

After that, the evaluation apparatus 100 outputs a selection result (task indices 1202 selected as the output subjects) acquired in Step S3605 (Step S3606). The evaluation apparatus 100 may display the selection result on the display being the output device 104, may output to a printer for printing, or may transmit the selection result to another computer which can be accessed through the communication IF 105.

FIG. 37 is a flowchart 4 for illustrating the example of the evaluation processing procedure executed by the evaluation apparatus 100. When the evaluation perspective in terms of the category is selected ("category" in Step S3402), the evaluation apparatus 100 first outputs the output screen 3300 (Step S3701). An output destination of the output screen 3300 may be a display being the output device 104, or may be another computer accessible through the communication IF 105. In the output screen 3300 at this time, task indices 1202 are not selected in the X-axis pulldown menu 3301 and the Y-axis pulldown menu 3302, and the graph 3304 is also blank.

After that, the evaluation apparatus 100 waits for the pressing of the execution button 3303 on the output screen 3300 (Step S3702). When the execution button 3303 is pressed (Yes in Step S3702), the evaluation apparatus 100 determines whether or not the task indices 1202 for the X axis and the Y axis are selected in the X-axis pulldown menu 3301 and the Y-axis pulldown menu 3302 (Step S3703). When the task indices 1202 for the X axis and the Y axis are not selected (No in Step S3703), the process returns to Step S3702. As described above, the user can freely select the task indices 1202 for the X axis and the Y axis.

When the task indices 1202 for the X axis and the Y axis are selected (Yes in Step S3703), the evaluation apparatus 100 identifies business entities having a specified category (Step S3704). The specified category is the business scale category specified in the water source category input field 2121, the water supply population scale category input field 2122, and the revenue earning water amount density category input field 2123. The evaluation apparatus 10.0 identifies business entities (specified-category business entities) classified into the specified category based on values of the task index item 202 (for example, current water supply population) of the DB group 120. As a result, it is possible to exclude business entities not in the specified category, thereby being capable of reducing the calculation load.

Moreover, when the specified-category business entity is a wide-area business entity, the evaluation apparatus 100 may refer to the related information DB 129, to thereby identify a plurality of related local governments corresponding to this specified-category business entity. The DB group 120 includes a value of the task index item for each local government, and hence the value of the task index item 202 can be used through the identification of the related local government.

After that, the evaluation apparatus 100 acquires a dataset of the specified-category business entities required to calculate the values of the respective task indices 1202 (Step S3705). Specifically, for example, the evaluation apparatus 100 extracts values of task index items 202 required to calculate the values of the task indices 1202 in the comparison reference fiscal year for the X axis and the Y axis selected in Step S3703 from the DB group 120 (except for the related information DB 129) for each of the specified-category business entities, to thereby acquire a dataset for each specified-category business entity. The values of the task index items 202 required to calculate the values of the task indices 1202 are, for example, the values of the task index items 202 included in the calculation equations 1203 corresponding to the task indices 1202 of the table 1 to the table 9.

When the specified-category business entity is a wide-area business entity, the evaluation apparatus 100 sums values of the same task index item 202 of a corresponding plurality of related local governments for each of the wide-area business entity, to thereby obtain a dataset as the wide-area business entity.

After that, the evaluation apparatus 100 calculates, for each of the specified-category business entities, the value of each task index 1202 in the comparison reference year (Step S3706). Specifically, for example, the evaluation apparatus 100 uses the dataset acquired in Step S3702 to calculate the values of the task indices 1202 in accordance with the calculation equations 1203 for each of the specified-category business entities.

Moreover, the evaluation apparatus 100 calculates the average of the values of each task index 1202 for the specified-category business entity in the comparison reference fiscal year (Step S3707). Also in this case, the evaluation apparatus 100 uses the dataset acquired in Step S3702 to calculate the value of the task index 1202 in accordance with the calculation equation 1203 for each specified-category business entity, and calculates an average of the specified-category business entities.

After that, the evaluation apparatus 100 plots the values calculated in Step S3706 and Step S3707 on the graph 3304 (Step S3708), and outputs the plotted values as a screen (Step S3701). As a result, the output screen 3300 of FIG. 33 is output.

As described above, according to the evaluation apparatus 100 of the at least one embodiment, by identifying same-category business entities classified into the same scale category as that of the specified business entity based on the value of the task index item 202 relating to the population, business entities having different scale categories can be excluded. Thus, it is not required for the evaluation apparatus 100 to extract the values of the task index items 202 and to calculate the values of the task indices 1202 for the business entities having the different scale categories, thereby being capable of reducing the calculation load and narrowing down the output results. Moreover, by selecting the output subjects based on the predetermined evaluation criterion, the output result can be narrowed down. As described above, the evaluation apparatus 100 allows the user to comprehensively grasp useful task indices, and can suppress overlook of information.

Moreover, by allowing the user to select two task indices 1202, the evaluation apparatus 100 narrows task indices down to the two task indices 1202, and is thus not required to extract values of task index items 202 corresponding to task indices 1202 other than the two task indices 1202 and to calculate values of those task indices 1202, thereby being capable of reducing the calculation load and narrowing down the output results. Moreover, the user selects two task indices 1202, and convenience can thus be increased.

Moreover, when the specified business entity, the same-category business entity, or the specified-category business entity corresponds to a wide-area business entity, the evaluation apparatus 100 extracts values of task index items 202 of corresponding related local governments, sums the values of each of the same task index items 202, and applies the sum to the calculation of task indices 1202. Thus, evaluation of the wide-area business entities can also be covered.

It should be noted that this disclosure is not limited to the above-mentioned embodiments, and encompasses various modification examples and the equivalent configurations within the scope of the appended claims without departing from the gist of this disclosure. For example, the above-mentioned embodiments are described in detail for a better understanding of this disclosure, and this disclosure is not necessarily limited to what includes all the configurations that have been described. Further, a part of the configurations according to a given embodiment may be replaced by the configurations according to another embodiment. Further, the configurations according to another embodiment may be added to the configurations according to a given embodiment. Further, a part of the configurations according to each embodiment may be added to, deleted from, or replaced by another configuration.

Further, a part or entirety of the respective configurations, functions, processing modules, processing means, and the like that have been described may be implemented by hardware, for example, may be designed as an integrated circuit, or may be implemented by software by a processor interpreting and executing programs for implementing the respective functions.

The information on the programs, tables, files, and the like for implementing the respective functions can be stored in a storage device such as a memory, a hard disk drive, or a solid state drive (SSD) or a recording medium such as an IC card, an SD card, or a DVD.

Further, control lines and information lines that are assumed to be necessary for the sake of description are described, but not all the control lines and information lines that are necessary in terms of implementation are described. It may be considered that almost all the components are connected to one another in actuality.

## Claims

1. An evaluation apparatus, comprising:
a processor configured to execute a program; and
a storage device configured to store the program,
the evaluation apparatus being configured to access a database configured to store, for each business entity, values of a plurality of task index items including a task index item relating to a population,
the processor being configured to execute:
acquisition processing of acquiring an evaluation perspective of the business entity;
identification processing of identifying same-category business entities classified into the same scale category as the scale category of a specified business entity based on the value of the task index item relating to the population;
extraction processing of extracting the values of the plurality of task index items from the database for each of the specified business entity and the same-category business entities identified by the identification processing based on the evaluation perspective acquired by the acquisition processing;
calculation processing of calculating values of a plurality of task indices through use of the values of the plurality of task index items extracted by the extraction processing;
selection processing of selecting a combination of the values of the same task indices of each of the specified business entity and the same-category business entities calculated by the calculation processing as one of an output subject or a non-output subject based on a predetermined evaluation criterion; and
output processing of outputting the combination of the values selected as the output subject by the selection processing.

2. The evaluation apparatus according to claim 1, wherein the evaluation perspective is an evaluation perspective that compares secular changes in the same task index of each of the specified business entity and the same-category business entities.

3. The evaluation apparatus according to claim 1, wherein the evaluation perspective is an evaluation perspective that compares the same task indices in a single fiscal year of each of the specified business entity and the same-category business entities.

4. The evaluation apparatus according to claim 1, wherein, in the selection processing, the processor is configured to select, based on a difference in the value between the specified business entity and the same-category business entities for each of the plurality of task indices, the combination of the values as one of the output subject or the non-output subject.

5. The evaluation apparatus according to claim 1,
wherein, in the selection processing, the processor is configured to select, based on a difference between the value of the specified business entity and a representative value of the same-category business entities for each of the plurality of task indices, a combination of the value of the specified business entity and the representative value of the same-category business entities as one of the output subject or the non-output subject, and
wherein, in the output processing, the processor is configured to output the combination of the value of the specified business entity and the representative value of the same-category business entities selected as the output subject by the selection processing.

6. The evaluation apparatus according to claim 1,
wherein the evaluation apparatus is configured to access a related information database in which a wide-area business entity and a plurality of related business entities are associated with each other,
wherein, in the extraction processing, the processor is configured to extract, when the specified business entity is the wide-area business entity, the values of the respective task index items of the plurality of related business entities corresponding to the wide-area business entity as the values of the plurality of task index items of the specified business entity, and
wherein, in the calculation, processing, the processor is configured to sum the values of the same task index items of the plurality of related business entities, to thereby use the sum as the value of each of the same task index items of the specified business entity.

7. The evaluation apparatus according to claim 1,
wherein the evaluation apparatus is configured to access a related information database in which a wide-area business entity and a plurality of related business entities are associated with each other,
wherein, in the extraction processing, the processor is configured to extract, when the same-category business entity is the wide-area business entity, the values of the respective task index items of the plurality of related business entities corresponding to the wide-area business entity as the values of the plurality of task index items of the same-category business entity, and
wherein, in the calculation processing, the processor is configured to sum the values of the same task index items of the plurality of related business entities, to thereby use the sum as the value of each of the same task index items of the same-category business entity.

8. An evaluation apparatus, comprising:
a processor configured to execute a program; and
a storage device configured to store the program,
the evaluation apparatus being configured to access a database configured to store values of a plurality of task index items for each business entity,
the processor being configured to execute:
identification processing of identifying specified-category business entities each having a category specified based on an evaluation perspective which is based on a business scale of each of the business entities;
selection processing of receiving a selection of a first task index and a second task index;
extraction processing of extracting, from the database, values of the plurality of task index items required for calculating a value of each of the first task index and the second task index selected by the selection processing for each of the specified-category business entities identified by the identification processing;
calculation processing of calculating the value of the first task index and the value of the second task index for each of the specified-category business entities through use of the values of the plurality of task index items extracted by the extraction processing; and
output processing of outputting calculation results obtained by the calculation processing.

9. The evaluation apparatus according to claim 8,
wherein the processor is configured to execute generation processing of generating a graph having the first task index and the second task index as axes based on the calculation results, and
wherein, in the output processing, the processor is configured to output the graph generated by the generation processing.

10. The evaluation apparatus according to claim 8,
wherein the evaluation apparatus is configured to access a related information database in which a wide-area business entity and a plurality of related business entities are associated with each other,
wherein, in the extraction processing, the processor is configured to extract, when the specified-category business entity is the wide-area business entity, the values of the respective task index items of the plurality of related business entities corresponding to the wide-area business entity as the values of the plurality of task index items of the specified-category business entity, and
wherein, in the calculation processing, the processor is configured to sum the values of the same task index items of the plurality of related business entities, to thereby use the sum as the value of each of the same task index items of the specified-category business entity.

11. An evaluation method to be executed by an evaluation apparatus, the evaluation apparatus comprising a processor configured to execute a program, and a storage device configured to store the program,
the evaluation apparatus being configured to access a database configured to store, for each business entity, values of a plurality of task index items including a task index item relating to a population,
the evaluation method comprising executing, by the processor:
acquisition processing of acquiring an evaluation perspective of the business entity;
identification processing of identifying same-category business entities classified into the same scale category as the scale category of a specified business entity based on the value of the task index item relating to the population;
extraction processing of extracting the values of the plurality of task index items from the database for each of the specified business entity and the same-category business entities identified by the identification processing based on the evaluation perspective acquired by the acquisition processing;
calculation processing of calculating values of a plurality of task indices through use of the values of the plurality of task index items extracted by the extraction processing;
selection processing of selecting a combination of the values of the same task indices of each of the specified business entity and the same-category business entities calculated by the calculation processing as one of an output subject or a non-output subject based on a predetermined evaluation criterion; and
output processing of outputting the combination of the values selected as the output subject by the selection processing.

12. An evaluation method to be executed by an evaluation apparatus, the evaluation apparatus comprising a processor configured to execute a program, and a storage device configured to store the program,
the evaluation apparatus being configured to access a database configured to store values of a plurality of task index items for each business entity,
the evaluation method comprising executing, by the processor:
identification processing of identifying specified-category business entities each having a category specified based on an evaluation perspective which is based on a business scale of each of the business entities;
selection processing of receiving a selection of a first task index and a second task index;
extraction processing of extracting, from the database, values of the plurality of task index items required for calculating a value of each of the first task index and the second task index selected by the selection processing for each of the specified-category business entities identified by the identification processing;
calculation processing of calculating the value of the first task index and the value of the second task index for each of the specified-category business entities through use of the values of the plurality of task index items extracted by the extraction processing; and
output processing of outputting calculation results obtained by the calculation processing.

13. An evaluation program for causing a processor configured to access a database configured to store, for each business entity, values of a plurality of task index items including a task index item relating to a population to execute:
acquisition processing of acquiring an evaluation perspective of the business entity;
identification processing of identifying same-category business entities classified into the same scale category as the scale category of a specified business entity based on the value of the task index item relating to the population;
extraction processing of extracting the values of the plurality of task index items from the database for each of the specified business entity and the same-category business entities identified by the identification processing based on the evaluation perspective acquired by the acquisition processing;
calculation processing of calculating values of a plurality of task indices through use of the values of the plurality of task index items extracted by the extraction processing;
selection processing of selecting a combination of the values of the same task indices of each of the specified business entity and the same-category business entities calculated by the calculation processing as one of an output subject or a non-output subject based on a predetermined evaluation criterion; and
output processing of outputting the combination of the values selected as the output subject by the selection processing.

14. An evaluation program for causing a processor configured to access a database configured to store values of a plurality of task index items for each business entity to execute:
identification processing of identifying specified-category business entities each having a category specified based on an evaluation perspective which is based on a business scale of each of the business entities;
selection processing of receiving a selection of a first task index and a second task index;
extraction processing of extracting, from the database, values of the plurality of task index items required for calculating a value of each of the first task index and the second task index selected by the selection processing for each of the specified-category business entities identified by the identification processing;
calculation processing of calculating the value of the first task index and the value of the second task index for each of the specified-category business entities through use of the values of the plurality of task index items extracted by the extraction processing; and
output processing of outputting calculation results obtained by the calculation processing.
